**Europäisches Patentamt**

**European Patent Office**

**Office européen des brevets**

(19)

(11) **EP 1 553 508 A1**

(12) ## DEMANDE DE BREVET EUROPEEN

(43) Date de publication:
**13.07.2005 Bulletin 2005/28**

(51) Int Cl.⁷: **G06F 17/50**

(21) Numéro de dépôt: **05352001.1**

(22) Date de dépôt: **05.01.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **09.01.2004 FR 0400168**

(71) Demandeurs:
- **AIRBUS FRANCE**
  **31060 Toulouse (FR)**
- **Eads CCR**
  **75781 Paris Cedex 16 (FR)**

(72) Inventeurs:
- **Rouch, Louis**
  **31300 Toulouse (FR)**
- **Delpech, André**
  **31200 Toulouse (FR)**
- **Molinari, Laurent**
  **31370 Villeneuve Tolosane (FR)**
- **Baudrillard, Gilles**
  **92800 Pavillons (FR)**

(74) Mandataire: **Santarelli**
  **Immeuble Innopolis A,**
  **B.P. 388**
  **31314 Labège Cedex (FR)**

(54) ## Procédé de réalisation d'un schéma de câblage électrique

(57)     Ce procédé permet la réalisation automatique d'un schéma de câblage électrique (WD) sur lequel se trouvent des boîtes (4) représentant chacune un composant utilisé dans un dispositif électrique, des liaisons (6) représentant chacune un câble de connexion et des bornes de connexion correspondant à un point de connexion possible entre une liaison (6) et une boîte (4), les boîtes (4) étant disposées selon un axe des abscisses et un axe des ordonnées.

Il comporte les étapes suivantes :

- entrée des composants et des câbles à représenter sur ledit schéma de câblage, chaque composant étant d'un type prédéterminé,
- génération et résolution d'un premier système d'équations pour optimiser le positionnement relatif des boîtes sur l'axe des abscisses et leur orientation,
- génération et résolution d'un second système d'équations pour optimiser le placement relatif des boîtes et des bornes par rapport à l'axe des ordonnées,
- génération et résolution d'un troisième système d'équations pour placer de manière absolue les boîtes et les câbles, et
- réalisation du schéma (WD) correspondant aux données numériques trouvées par la résolution des systèmes d'équations.

**Fig. 10**

**Description**

La présente invention concerne un procédé de réalisation d'un schéma de câblage.

La présente invention est plus particulièrement destinée au domaine de l'aéronautique. Toutefois elle peut trouver des applications dans d'autres secteurs, que ce soit dans le domaine du transport (automobile, spatial, etc...) ou dans d'autres domaines industriels (réalisation de machines industrielles, domotique, etc...). Elle concerne notamment des câblages électriques mais s'applique aussi au domaine de l'hydraulique, du pneumatique, etc....

Dans un aéronef moderne, les circuits électriques mettent en oeuvre un nombre de composants important et sont relativement complexes. Pour les représenter, afin de pouvoir dans un premier temps les fabriquer, puis par la suite intervenir lors de l'entretien de l'aéronef, on réalise d'une part des plans de principe et d'autre part des schémas de câblage.

Un aéronef est composé de différents systèmes électriques (moteurs, génération électrique, commandes de vol, freinage, etc...). Chacun de ces systèmes est découpé en différents chapitres, appelés aussi fonctions, selon la norme ATA100 (Air Transport Association). Les plans de principe décrivent schématiquement les interconnexions électriques entre les différents éléments qui composent une fonction d'un système. Ils permettent une bonne compréhension de la fonction décrite et facilitent les recherches de pannes. Les schémas (ou plans) de câblage, appelés aussi en abrégé WD pour Wiring Diagram (soit schéma de câblage en anglais) sont conçus à partir des informations contenues dans les plans de principe et intègrent toutes les informations nécessaires pour la fabrication de la fonction correspondante du système. Un schéma de câblage permet également de fournir une liste de câbles à la division chargée de la production du système électrique.

Actuellement, tant les plans de principe que les schémas de câblage sont réalisés manuellement. Bien entendu, des logiciels de DAO (Dessin Assisté par Ordinateur) sont utilisés pour la réalisation de ces plans et schémas. La conception du dessin reste quant à elle dévolue au dessinateur qui doit placer les composants et réaliser le routage des câbles les reliant.

La présente invention a pour but de remplacer la réalisation manuelle des schémas de câblage réalisés au cours du cycle de vie d'un aéronef (ou de tout autre "machine" industrielle) par une génération automatique. De nombreuses règles graphiques doivent être respectées. Ceci rend très complexe l'automatisation de la réalisation de schémas de câblage. Parmi les contraintes existantes, on peut citer par exemple le fait qu'un câble représenté sur un schéma ne doit pas traverser un composant représenté sur celui-ci. Des câbles ne doivent pas être superposés. Ils doivent être représentés uniquement par des segments horizontaux ou verticaux. Un espace suffisant doit être conservé entre deux "objets" voisins (câbles ou composants). D'autres contraintes, moins fortes, doivent également de préférence être respectées. Ainsi par exemple les divers composants représentés doivent être de préférence alignés verticalement. Il faut en outre minimiser le nombre des croisements entre les câbles de même que le nombre de coudes réalisés par ceux-ci. Ces contraintes sont données à titre d'exemples et la liste de celles-ci n'est pas exhaustive.

Pour permettre la réalisation de schémas de câblage de manière automatique, la présente invention propose un procédé de réalisation d'un schéma de câblage sur lequel se trouvent des boîtes représentant chacune un composant (ou une partie de composant) utilisé dans un dispositif à câbler, des liaisons représentant chacune une connexion entre deux composants et des bornes correspondant à un point de connexion possible entre une liaison et une boîte, les boîtes étant disposées selon un axe des abscisses et un axe des ordonnées.

Selon l'invention, ce procédé comporte les étapes suivantes :

- entrée des composants à représenter sur ledit schéma de câblage, chaque composant étant d'un type prédéterminé auquel il correspond des contraintes traduites au préalable sous forme d'équations linéaires,
- entrée des connexions à représenter sur ledit schéma de câblage,
- génération d'un premier système d'équations et résolution de ce système pour optimiser le positionnement relatif des boîtes sur l'axe des abscisses à des abscisses prédéterminées ainsi que l'orientation de ces boîtes,
- génération d'un second système d'équations et résolution de ce système pour optimiser le placement relatif des boîtes par rapport à l'axe des ordonnées ainsi que le positionnement relatif des bornes de chaque boîte par rapport à ce même axe, et
- génération d'un troisième système d'équations et résolution de ce système pour placer de manière absolue les boîtes par rapport aux axes des abscisses et des ordonnées, et aussi optimiser le routage des connexions.

Plus haut par entrée, il faut comprendre toute manière, manuelle ou automatique, permettant d'introduire des données dans un système informatique, telle par exemple saisie ou extraction d'une base de données.

La découpe du problème complexe à résoudre pour réaliser un schéma de câblage permet ici de rendre ce problème solvable. La manière de découper ce problème permet aussi, à chaque étape, d'appréhender à chaque fois le schéma de câblage dans son ensemble.

Dans le schéma à réaliser, les connexions à représenter sont appelées par exemple des câbles et comportent un ou plusieurs fils. Une gaine est éventuellement associée à un câble comportant plusieurs fils. Pendant le positionnement relatif des boîtes sur l'axe des abscisses, les gaines des câbles sont avantageusement positionnées relativement par rapport aux boîtes auxquelles elles sont connectées. Les gaines des câbles sont traitées ici un peu à part des autres composants car il s'agit de composants d'un type particulier. En effet, les gaines se différencient des autres composants représentés notamment par le fait qu'il s'agit de composants qui peuvent être traversés par des fils et/ou des câbles et qu'ils peuvent posséder des points connexions destinés pour représenter graphiquement des éventuelles reprises de blindage.

Dans le procédé décrit ci-dessus, l'étape comportant la génération d'un troisième système d'équations est avantageusement mise en oeuvre avec les deux sous-étapes suivantes :

- génération d'un troisième système d'équations et résolution de ce système pour placer de manière absolue les boîtes par rapport à l'axe des ordonnées, et
- génération d'un quatrième système d'équations et résolution de ce système pour placer de manière absolue les boîtes par rapport à l'axe des abscisses et optimiser le routage des connexions.

Dans un procédé selon l'invention, l'optimisation du routage des connexions prévoit avantageusement de vérifier la présence sur les connexions d'un emplacement pour un texte. En effet, la plupart des schémas de câblage prévoient que les connexions (câbles ou fils) soient repérées par un ou plusieurs textes. Après avoir effectué la vérification de la présence d'un emplacement pour mettre un texte, l'emplacement de ce texte sur les connexions est par exemple déterminé par résolution d'un système d'équations.

Afin de pouvoir aussi résoudre par un procédé selon l'invention des problèmes non linéaires, il est proposé par exemple que les équations linéaires posées ici utilisent uniquement des nombres entiers.

De manière originale, on prévoit ici qu'une boîte est définie par sa taille, ses bornes et qu'elle comporte éventuellement un symbole graphique et/ou un texte et/ou un symbole de câble associé à une ou plusieurs bornes.

Comme indiqué plus haut, les boîtes utilisées sont de différents types. Le type d'une boîte détermine par exemple entre autres si la largeur de la boîte est variable, si sa hauteur est variable, si l'ordre de ses bornes est modifiable, si la boîte est munie de prises, ....

Pour le premier système d'équations mentionné plus haut, on suppose avantageusement que les différentes boîtes à représenter sont disposées sur un nombre prédéterminé de lignes verticales, et on prévoit que ce premier système d'équations comporte des équations traduisant des contraintes en hauteur de placement des boîtes sur ces lignes verticales.

Le premier système d'équations peut également comporter des équations évaluant le nombre de coudes réalisés dans les liaisons reliant les boîtes et d'autres équations pour minimiser ce nombre dans la résolution prévue dans l'étape correspondante.

Le second système d'équations évoqué plus haut comporte quant à lui par exemple des équations traduisant des contraintes liées au groupage de bornes de connexion au sein des différentes boîtes. On peut également prévoir que ce second système d'équations comporte des équations évaluant le nombre d'intersections réalisées entre les liaisons reliant les boîtes et que ce nombre tend à être minimisé dans l'étape correspondante.

En ce qui concerne le placement absolu des boîtes selon l'axe des ordonnées, les bornes de connexions des boîtes sont avantageusement disposées à des altitudes qui sont toutes multiples d'un pas de grille prédéterminé. Pour ce même placement, on peut également établir des équations évaluant le nombre de décrochages des liaisons et minimiser ce nombre de décrochages.

Quant au placement absolu des boîtes selon l'axe des abscisses, le nombre de recouvrements des liaisons dans la direction horizontale et dans la direction verticale est avantageusement évalué et ensuite minimisé. On peut ici aussi par exemple évaluer et minimiser le nombre des intersections des liaisons.

Dans un procédé selon l'invention, pour établir les équations des divers systèmes d'équations, on définit avantageusement des variables réelles, par exemple des variables correspondant à une localisation, une dimension, etc d'une part et des variables binaires prenant soit la valeur 0, soit la valeur 1, par exemple pour indiquer l'appartenance d'un élément à un ensemble, le positionnement relatif de deux éléments, etc d'autre part, et par la suite les équations sont la traduction à l'aide de ces variables de contraintes propres au type de schéma de câblage à réaliser.

Pour obtenir après la mise en oeuvre d'un procédé tel que décrit plus haut un schéma de câblage sur un écran ou tout autre moyen de visualisation, ou bien encore sur un support en papier ou similaire, on prévoit qu'un tel procédé comporte en outre, après les étapes de résolution des divers systèmes d'équations, les étapes suivantes :

- introduction des solutions issues de ces résolutions dans un traducteur permettant à partir de données numériques de réaliser un schéma, et
- réalisation du schéma correspondant aux données numériques trouvées par la résolution des systèmes d'équations.

L'invention vise aussi un système informatique et un compilateur comportant des moyens adaptés à mettre en oeuvre un procédé tel que décrit brièvement ci-dessus.

L'invention vise aussi un support d'informations lisible par un système informatique, éventuellement totalement ou partiellement amovible, notamment CD-ROM ou support magnétique, tel un disque dur ou une disquette, ou support transmissible, tel un signal électrique ou optique, et comportant des instructions d'un programme d'ordinateur permettant la mise en oeuvre d'un procédé tel que décrit brièvement ci-dessus, lorsque ce programme est chargé et exécuté par un système informatique.

L'invention vise aussi un programme d'ordinateur stocké sur un support d'informations, et comportant des instructions permettant la mise en oeuvre d'un procédé tel que décrit brièvement ci-dessus, lorsque ce programme est chargé et exécuté par un système informatique.

Des détails et avantages de la présente invention ressortiront mieux de la description qui suit, faite en référence au dessin schématique annexé sur lequel :

La figure 1 représente un exemple de schéma de câblage à réaliser par un procédé selon l'invention,

La figure 2 indique schématiquement la composition graphique d'un schéma de câblage,

La figure 3 est un tableau représentant schématiquement des contraintes impératives lors de la réalisation d'un schéma de câblage,

La figure 4 est un tableau représentant schématiquement des contraintes d'optimisation lors de la réalisation d'un schéma de câblage,

La figure 5 montre schématiquement la composition graphique d'une boîte apparaissant dans un schéma de câblage,

La figure 6 montre schématiquement la composition graphique d'une borne associée à une boîte,

Les figures 7 à 9 montrent schématiquement trois types de composants pouvant être représentés sur un schéma de câblage,

La figure 10 représente schématiquement un procédé de réalisation d'un schéma de câblage selon l'invention, et

La figure 11 représente un système informatique comportant des moyens adaptés pour la mise en oeuvre du procédé schématisé sur la figure 10.

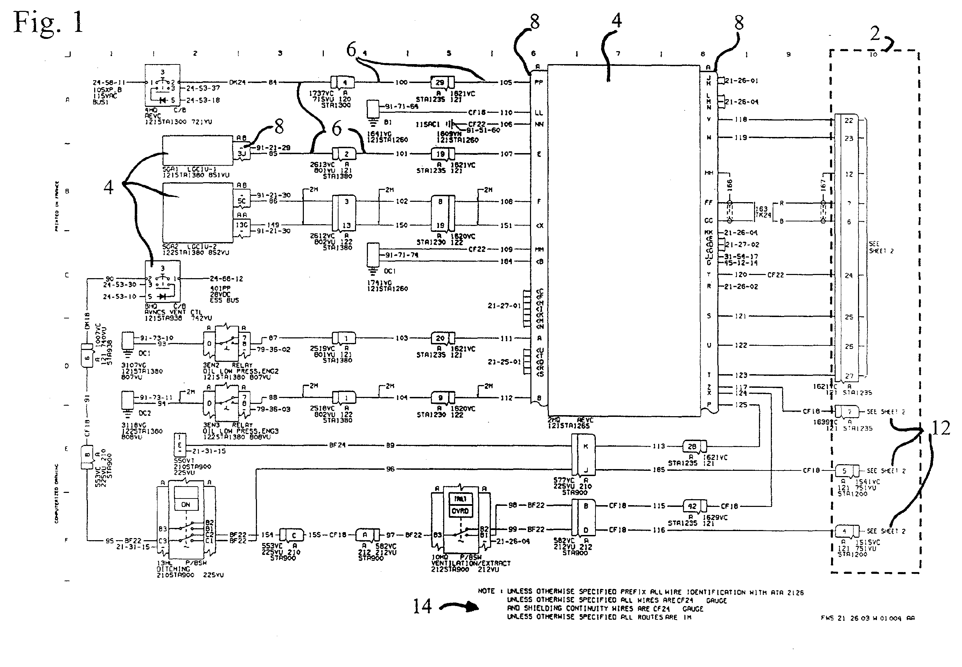

La figure 1 représente un exemple de schéma de câblage pouvant être réalisé à l'aide d'un procédé selon l'invention. Un tel schéma de câblage représente tout ou partie d'un dispositif permettant de réaliser une fonction électrique. Dans le cas de la figure 1, on remarque la présence d'une zone neutre 2 qui permet de faire le lien avec un autre schéma de câblage (non représenté au dessin).

On remarque aussi sur le schéma de câblage de la figure 1 la présence de boîtes 4 de forme sensiblement rectangulaire. Il y a de nombreux types de boîtes 4. Ces boîtes sont reliées entre elles à l'aide de liaisons 6 symbolisant des câbles. Ces liaisons 6 se raccordent aux boîtes 4 au niveau de bornes. Ces dernières sont disposées soit directement sur une boîte 4, soit au niveau d'une prise 8 solidaire de la boîte 4. Une même boîte 4 peut présenter à la fois des bornes pour un raccordement direct d'une liaison 6 et une (ou plusieurs) prise(s) 8 munie(s) d'au moins une borne. Certaines boîtes 4 se présentent simplement sous la forme d'un rectangle équipé de prises et/ou de bornes. D'autres boîtes 4 comportent en plus un graphique permettant d'identifier le composant représenté par la boîte. On remarque également, associé à chaque boîte 4 et chaque liaison 6, un texte formé de caractères alphanumériques permettant d'identifier la boîte ou la liaison correspondante.

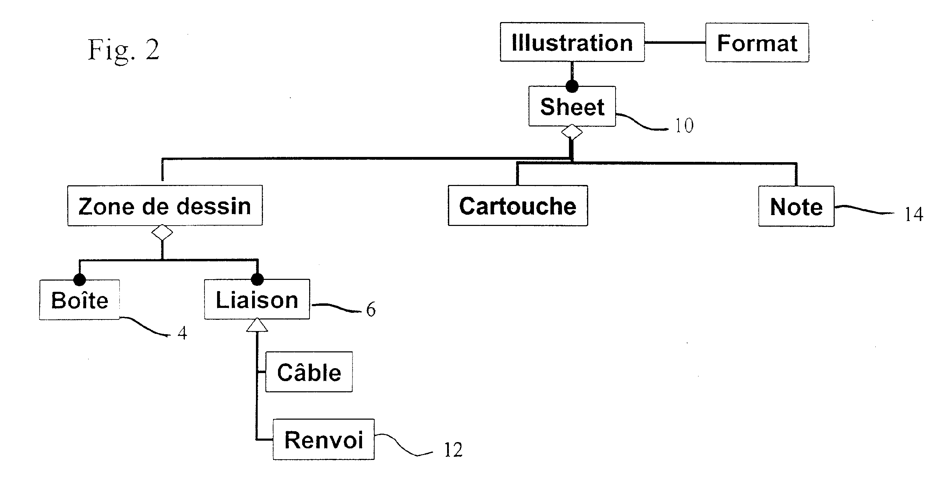

La figure 2 récapitule les divers éléments qui constituent un schéma de câblage. Au coeur de cette figure 2 se trouve la feuille 10 sur laquelle est réalisé le schéma de câblage. Cette feuille porte sur la figure 2 le nom anglais de "sheet". Pour cette feuille 10, il est important de connaître notamment son format (par exemple A3 ou A4) ainsi que ce qui est illustré sur cette feuille. Sur la partie basse de la figure 2, on a représenté les différents éléments composant la feuille 10. Il y a tout d'abord une zone de dessin décrite plus haut et sur laquelle apparaissent notamment des boîtes 4 et des liaisons 6. Une liaison 6 représente notamment un câble (ou un fil) comme indiqué plus haut mais dans certains cas, on peut considérer qu'il s'agit d'un renvoi 12 comme on peut en apercevoir sur la figure 1.

On trouve également sur la feuille 10 généralement un cartouche (non représenté au dessin) qui se présente le plus souvent sous la forme d'un rectangle. Ce cartouche est disposé habituellement sur la feuille à droite et/ou en bas de la zone de dessin. Il reçoit les inscriptions nécessaires et suffisantes pour l'identification et l'exploitation du document. Un tel cartouche contient le plus souvent aussi le nom de l'entreprise réalisant le schéma de câblage correspondant ainsi que le nom de la personne ayant réalisé ce schéma. D'autres indications (titre, date, numéro d'identification, etc...) peuvent également apparaître dans le cartouche. En plus de ce cartouche, comme on peut le voir notamment sur la figure 1, il est également possible de prévoir des notes 14. Ces dernières donnent des indications générales sur les composants représentés dans la zone de dessin.

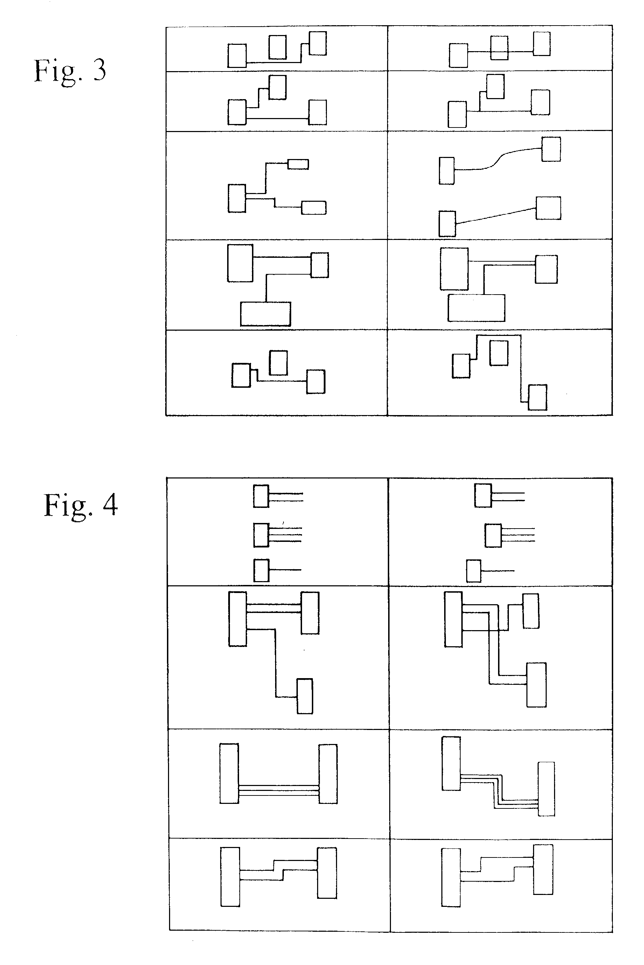

Comme il est connu de l'homme du métier, des règles de dessin doivent être respectées pour la réalisation d'un schéma de câblage. Le tableau de la figure 3 reprend à titre d'illustration quelques-unes de ces règles. La colonne de gauche de ce tableau illustre des représentations graphiques correctes tandis que la colonne de droite illustre des représentations graphiques incorrectes. Le tableau de la figure 3 rappelle ainsi qu'une liaison 6 ne doit pas traverser une boîte 4. Il ne faut pas non plus que deux liaisons distinctes soient superposées. Ces liaisons doivent être représentées par des segments horizontaux ou verticaux. Il convient également de laisser suffisamment d'espace (en général 5 mm) entre les divers objets apparaissant dans la zone de dessin (boîtes et liaisons). Enfin, le tableau de la figure 3 illustre qu'une liaison ne doit pas contourner un composant.

Le tableau de la figure 4 illustre quant à lui des contraintes d'optimisation qu'il convient de mettre en oeuvre dans la mesure du possible. La colonne de gauche de ce tableau illustre des représentations graphiques préférées tandis que la colonne de droite illustre des représentations graphiques à éviter dans la mesure du possible. Ainsi, il est préférable d'aligner verticalement des boîtes, de minimiser le nombre de croisements des liaisons ainsi que le nombre de coudes formés par ces liaisons et également d'uniformiser le tracé des liaisons.

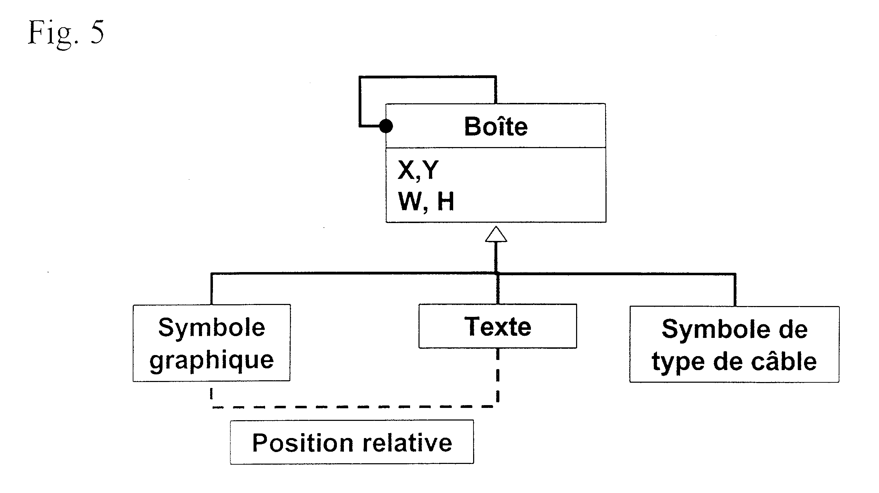

La figure 5 montre schématiquement la composition graphique d'une boîte apparaissant sur un schéma de câblage. Cette boîte est disposée sur le schéma de câblage à l'abscisse x et à l'ordonnée y. Elle est de forme rectangulaire et présente une largeur w (dans le sens de l'axe des abscisses) et une hauteur h (dans le sens de l'axe des ordonnées). Outre son contour rectangulaire, une boîte 4 peut comporter éventuellement un symbole graphique et/ou du texte et/ou un symbole de type de câbles à raccorder à cette boîte.

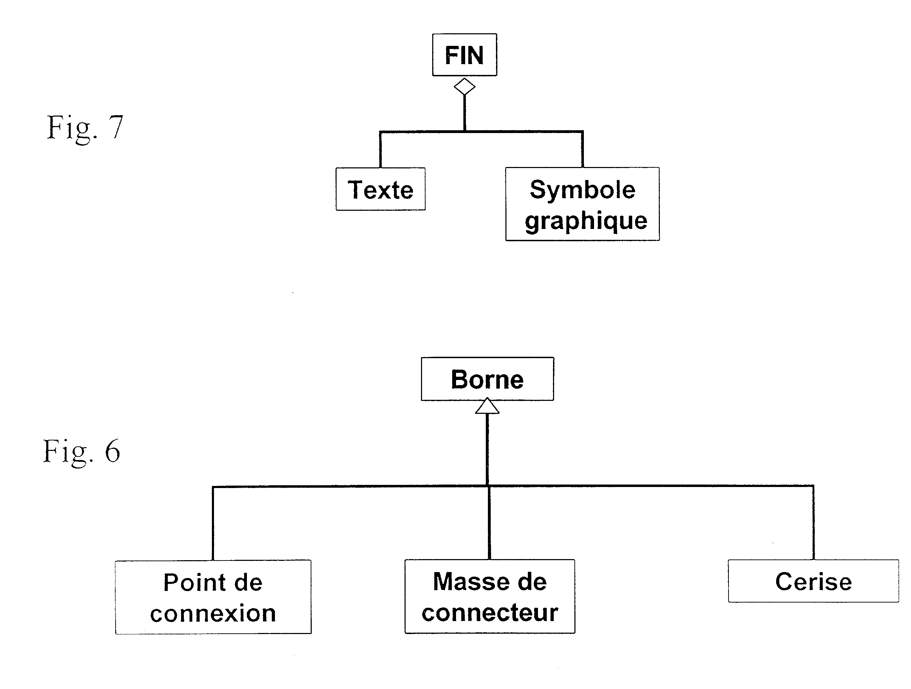

La figure 6 montre quant à elle la composition graphique d'une borne. Une borne est considérée ici comme un point de connexion, ou une masse de connecteur ou bien encore une cerise (c'est-à-dire une extrémité de câble non connectée et recouverte d'une protection).

Pour la mise en oeuvre du procédé selon l'invention, il convient préalablement d'analyser les différents types de boîtes à représenter. On remarque en effet que selon qu'une boîte 4 représente tel composant ou tel autre composant, des contraintes différentes s'appliquent à la boîte à représenter. Ainsi, à titre d'exemple, la boîte peut être de dimensions données et fixes ou bien de dimensions variables. Pour certains composants, il est possible de représenter les bornes correspondantes dans un ordre donné ou bien dans n'importe quel ordre.

Ainsi, après analyse de tous les composants pouvant être représentés sur un schéma de câblage, il convient de regrouper les composants par type de composants en fonction des contraintes à respecter lorsque l'on dessine sur le schéma de câblage la boîte représentative de ce composant.

Les figures 7 à 9 représentent différents types de composants. Sur la figure 7, on a représenté un composant appelé "FIN". Un tel composant est constitué uniquement d'un texte et d'un symbole graphique. On trouve par exemple un tel composant à une extrémité d'une liaison.

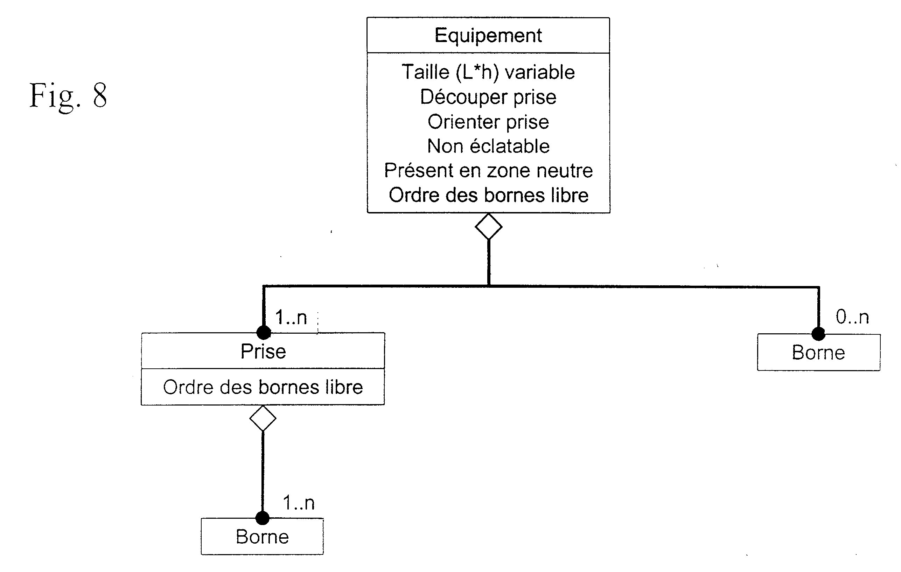

Sur la figure 8, on décrit un type de composant que l'on a nommé arbitrairement "équipement". Comme indiqué sur cette figure, une boîte représentant un composant de type "équipement" comporte de 1 à n prises et entre 0 et n bornes. Chaque prise comporte de 1 à n bornes et l'ordre de ces bornes dans la prise est libre. En ce qui concerne le composant de type "équipement", sa taille est variable tant en ce qui concerne sa hauteur que sa largeur. Il est possible de découper une prise de ce composant en deux "sous-prises". Il est possible d'orienter une prise de cet "équipement". Ce dernier n'est toutefois pas éclatable. Il peut être présent dans une zone neutre 2 d'un schéma de câblage. L'ordre des bornes de ce composant est libre.

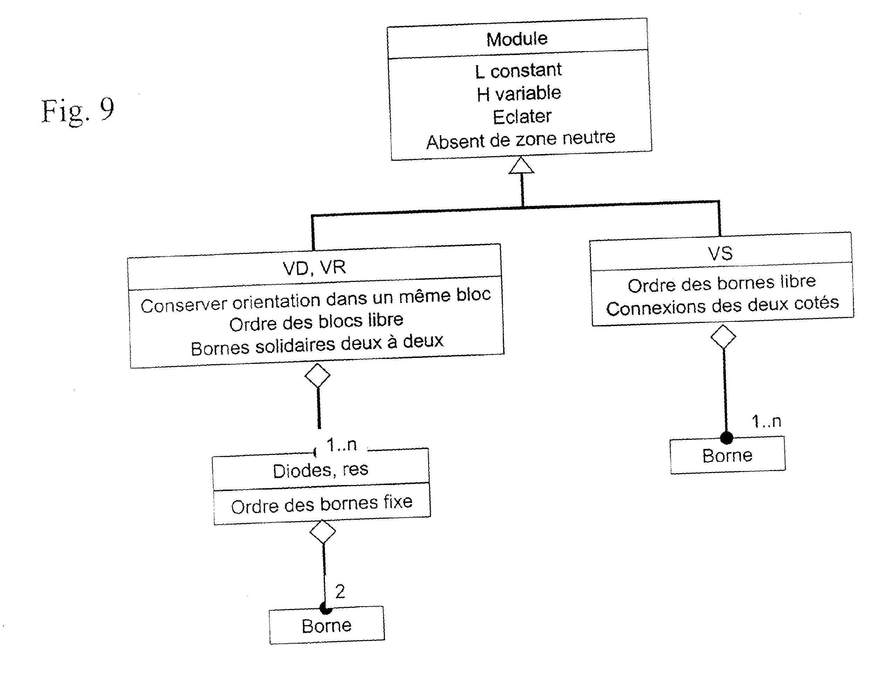

Sur la figure 9, plusieurs types de composants sont définis. On a ainsi tout d'abord des composants de type "diode, résistance". Un tel composant comporte deux bornes et l'ordre des bornes est fixe. On a ensuite un composant de type "VD, VR". Un tel composant comporte de 1 à n composants de type "diode, résistance". Dans ce composant de type "VD, VR", il convient de conserver l'orientation dans un même bloc, l'ordre des blocs est libre et les bornes sont solidaires deux à deux. Dans un composant de type "VS", on retrouve 1 à n bornes. L'ordre des bornes est libre et des connexions sont réalisées des deux côtés du composant. Enfin, cette figure 9 définit un composant de type "module" qui est constitué soit d'un composant de type "VD, VR", soit d'un composant de type "VS". Un tel "module" est de largeur constante, présente une hauteur variable, peut être éclaté et ne se trouve jamais en zone neutre (partie commune à des feuilles adjacentes).

Bien entendu, il est préférable d'avoir le nombre le plus restreint possible de types de composants. En fonction de l'application (aéronautique, automobile, domotique, etc...) le nombre de type de composants sera plus ou moins important. Cette définition des types est faite une fois pour toute préalablement à la mise en oeuvre du procédé selon l'invention.

Avant de réaliser alors un schéma, il convient d'indiquer les différents composants devant être représentés sur ce schéma ainsi que la manière dont sont reliés ces composants. Ces informations peuvent être par exemple retirées du plan de principe correspondant au schéma devant être réalisé ou bien d'une base de données.

Le procédé selon l'invention prévoit alors de mettre en équations les données correspondant aux informations fournies concernant les boîtes à représenter et les liaisons entre celles-ci. On pourrait envisager de réaliser un système d'équations reprenant toutes les contraintes liées à la réalisation du schéma de câblage. On obtiendrait alors un système d'équations de taille importante qu'aucun ordinateur ne peut actuellement résoudre dès lors qu'une dizaine de boîtes au moins doivent être représentées (ce qui est le cas de la plupart des schémas de câblage). La présente invention propose alors de décomposer le problème en plusieurs sous-problèmes tout en ayant le souci de considérer à chaque étape la globalité du schéma de câblage. Dans la description qui suit, le problème, considéré dans l'ensemble, est résolu par quatre passes successives. Dans certain cas, les troisième et quatrième passes peuvent être regroupées en une seule passe.

La présente invention propose également d'utiliser une programmation linéaire. Avantageusement, dans les équations et inéquations alors écrites, on ne met en oeuvre que des nombres entiers. Il est possible de résoudre par ce moyen des problèmes non linéaires. On traduit alors sous forme d'équations linéaires tant d'une part les contraintes liées aux règles de dessin que d'autre part les contraintes définissant le type de boîtes à représenter.

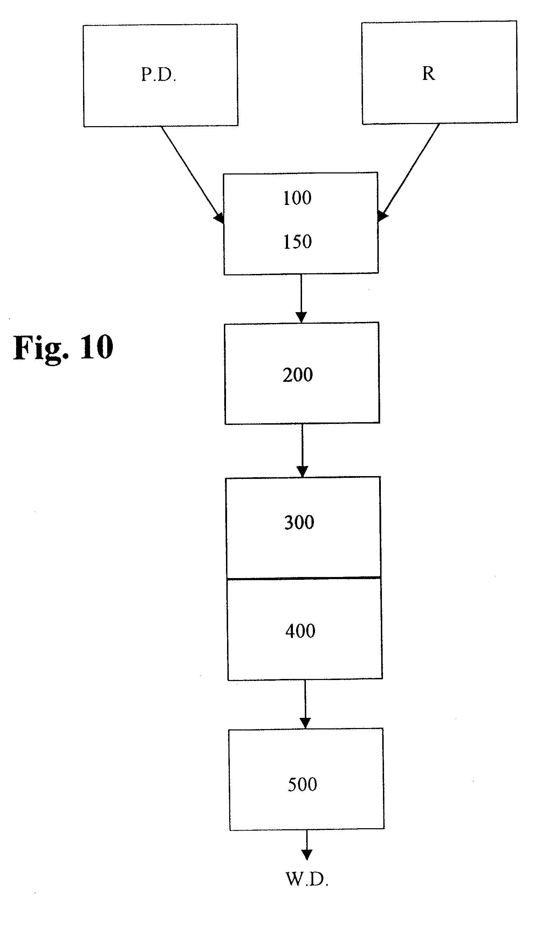

On a représenté sur la figure 10 schématiquement les grandes étapes d'un procédé pour la réalisation d'un schéma de câblage selon l'invention. A partir de données que l'on trouve dans un plan de principe, appelé sur la figure 10 P. D. (pour Principal Diagram soit plan de principe en anglais) et à partir des règles R, telles celles représentées schématiquement sur les figures 3 et 4, on établit divers systèmes d'équations. Dans une première étape 100, des équations traduisant des contraintes de placement relatif des boîtes à positionner et d'orientation de celles-ci sont décrites. On considère dans cette première étape le positionnement relatif des boîtes 4 sur l'axe horizontal. Une référence 150 est portée dans le rectangle correspondant à la première passe pour indiquer qu'après le placement relatif des boîtes sur l'axe horizontal, on réalise à part le placement relatif sur l'axe horizontal des gaines de câbles.

Dans la seconde étape portant la référence 200, on s'intéresse ensuite au placement relatif sur les verticales des différents composants. Ce placement influe notamment sur les croisements réalisés entre les liaisons 6. En résolvant les équations écrites au cours de cette seconde étape, on connaît le positionnement relatif des divers composants dans la direction verticale.

Les divers composants étant placés relativement les uns par rapport aux autres, on s'intéresse alors dans la troisième étape portant la référence 300 au placement absolu sur les verticales des différentes boîtes 4. Pour optimiser ce placement, on essaie de limiter le nombre de coudes que font les liaisons reliant les boîtes.

La quatrième étape, portant la référence 400, s'intéresse alors au placement absolu des divers éléments selon la direction horizontale. Au cours de cette étape 400, des équations pour finaliser le routage des câbles et pour placer les textes à inscrire sur le schéma de câblage sont établies et résolues.

Dans certains cas, il est envisageable de traiter les étapes 300 et 400 en une seule étape. Ceci est symbolisé sur la figure 10 par le raccrochement des cases symbolisant les étapes 300 et 400. Ce procédé selon l'invention, après mise en oeuvre des étapes 100, 200, 300 et 400 permet l'obtention d'un schéma de câblage W.D..

Comme illustré sur la figure 10, une étape 500 peut également être prévue. Il s'agit d'une étape concernant le placement de textes sur le schéma obtenu ainsi que la mise en place de commentaires ou similaires comme par exemple des routes, utilisées sur les schémas de câblage dans l'industrie aéronautique. Cette étape peut être intégrée dans un procédé selon l'invention mais on peut aussi envisager de réaliser cette étape entièrement à part de ce procédé.

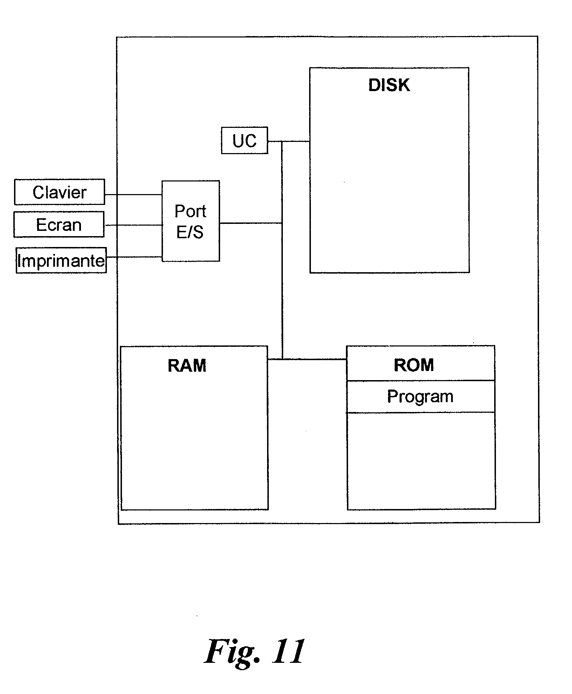

La figure 11 représente schématiquement un dispositif adapté à mettre un oeuvre un procédé de réalisation de schémas de câblage conforme à la présente invention, dans un mode préféré de réalisation.

Ce dispositif peut notamment être constitué par un ordinateur.

Dans l'exemple de réalisation décrit ici, le dispositif de réalisation de schémas de câblage comporte un clavier, un écran et une imprimante reliés à un port d'entrées-sorties d'une carte de traitement.

La carte de traitement comporte, reliés entre eux par un bus d'adresses et de données :

une unité centrale de traitement UC ;
une mémoire vive RAM ;
une mémoire morte ROM ;
une mémoire non volatile DISK et
le port d'entrées-sorties E/S.

Chacun des éléments illustrés en figure 11 est bien connu de l'homme du métier des micro-ordinateurs et, plus généralement, des systèmes de traitement de l'information. Ces éléments communs ne sont donc pas décrits ici.

La mémoire non volatile DISK est par exemple constituée par un disque dur.

La mémoire morte ROM est adaptée à conserver le programme de fonctionnement de l'unité centrale de traitement UC. Elle comporte notamment un registre "Program" pour mémoriser les instructions d'un programme mettant en oeuvre un procédé conforme à l'invention, tel que décrit précédemment en référence à l'organigramme de la figure 10. Les schémas de câblage réalisés peuvent être visualisés sur l'écran et imprimés sur l'imprimante du système informatique.

Dans la suite de la description, sont indiqués pour chaque passe, des exemples d'équations données à titre illustratif et permettant à l'homme du métier de poser les équations correspondant à son problème pour réaliser un schéma de câblage de façon automatique.

**Première passe**

Le but de cette première passe est de placer les boîtes et autres éléments à représenter les uns par rapport aux autres dans le sens horizontal. On suppose ici que le schéma de câblage, qui est un plan 2D, comporte un axe des abscisses (x) horizontal et un axe des ordonnées (y) vertical. Les abscisses sont croissantes de l'arrière vers l'avant du plan et les ordonnées sont croissantes du bas vers le haut du plan.

Lors de cette première passe, on souhaite également orienter les composants. Une bonne orientation des composants permet de limiter le nombre de coudes réalisés au niveau des liaisons. Pour chaque boîte, il y a au moins deux orientations possibles. Comme indiqué déjà plus haut, les boîtes sont de forme rectangulaire. Elles présentent deux côtés horizontaux et deux côtés verticaux. Les bornes d'une boîte sont disposées sur les côtés verticaux. L'orientation d'une boîte consiste donc à déterminer l'orientation des bornes de cette boîte : quelles bornes sont vers l'avant du schéma de câblage ? Si la boîte comporte des bornes indépendantes, il peut y avoir un grand nombre d'orientations possibles.

Afin d'aligner les boîtes sur des verticales, on peut par exemple prévoir dix lignes verticales sur le schéma de câblage et placer les boîtes à représenter centrées sur ces lignes verticales. La première et/ou la dernière et/ou aucune de ces lignes verticales du schéma à représenter correspond à une zone neutre 2. Sur l'exemple de la figure 1, seule la dernière ligne verticale est en zone neutre 2. On ne peut trouver en zone neutre que certains types de composants.

Variables de placement

On peut tout d'abord définir des variables de placement. On considère alors un composant x. On appelle k le nombre correspondant à une ligne verticale et $X(x)$ l'abscisse du composant x. On définit alors les variables suivantes :

$ISX(x, k) = 1$ si le composant x est à l'abscisse k, 0 sinon et

$$SS(x, k) = \sum_{j=o}^{k} ISX(x, j)$$

On a évidemment :

$$\forall x \sum_{k} ISX(x, k) = 1$$

ainsi que

$$X(x) = \sum_{k} k.ISX(x, k)$$

Pour un composant b se trouvant en début de feuille et pour un composant e se trouvant en fin de feuille on a également les contraintes suivantes :

$$\forall b \in Begin \ \forall x \notin Begin \ \forall k \ SS(b, k) \geq SS(x, k)$$

$$\forall e \in End \ \forall x \notin End \ \forall k \ SS(x, k) \geq SS(e, k)$$

Begin étant l'ensemble des composants se trouvant en début de feuille et End étant l'ensemble des composants se trouvant en fin de feuille.

Placement relatif des composants

On considère maintenant deux composants x1 et x2. On définit alors la fonction delta de position relative de la manière suivante :

$$\text{delta(x1, x2)} = 0 \text{ si } X(x1) < X(x2) \text{ et delta(x1, x2)} = 1 \text{ si } X(x1) > X(x2)$$

On a:

$$\forall k \ (1\text{-delta(x1, x2)}) \geq \text{ISX(x1, k)} + (1\text{-SS(x2, k)}) -1$$

$$\forall k \ \text{delta(x1, x2)} \geq \text{ISX(x1, k)} + \text{SS(x2, k-1)} -1$$

Si x1 et x2 sont connectés avec x1 distinct de x2, on a également :

$$\forall k \ \text{ISX(x1, k)} + \text{ISX(x2, k)} \leq 1$$

Cette dernière ligne indique que deux composants connectés l'un à l'autre ne se trouvent pas sur une même ligne verticale.

On peut toutefois également prévoir qu'il est possible de connecter l'un à l'autre deux composants se trouvant sur une même ligne verticale. On définit alors pour le placement relatif des composants les équations suivantes :

$$\text{delta(x1, x2)} = 0 \text{ si } X(x1) \leq X(x2) \text{ et delta(x1, x2)} = 1 \text{ si } X(x1) > X(x2)$$

$$\text{deq(x1, x2)} = 0 \text{ si } X(x1) = X(x2) \text{ et deq(x1, x2)} = 1 \text{ si } X(x1) \neq X(x2)$$

On a dans ce cas (connexions verticales) les équations suivantes :

$$\text{deq(x2, x1)} = \text{deq(x1, x2)}$$

$$\text{delta(x1, x2)} + \text{delta(x2, x1)} = \text{deq(x1, x2)}$$

$$\forall k \ (1 - \text{delta(x1, x2)}) \geq \text{ISK(x1, k)} + (1 - \text{SS(x2, k -1)}) -1$$

$$\forall k \ \text{delta(x1, x2)} \geq \text{ISK(x1, k)} + \text{SS(x2, k - 1)} - 1$$

$$\forall k \ \text{deq(x1, x2)} \geq \text{ISK(x1, k)} - \text{ISK(x2, k)}$$

$$\forall k \ \text{deq(x1, x2)} \leq \text{ISK(x2, k)} - \text{ISK(x1, k)}$$

$$\forall k \ \text{deq(x1, x2)} \leq 2 - \text{ISK(x2, k)} - \text{ISK(x1, k)}$$

Ces équations ci-dessus, dans les deux cas (connexions verticales ou non), ne sont à générer que pour un seul des couples (x1, x2) et (x2, x1).

Variables d'orientation

On considère une borne b1 d'un composant x. On définit alors la fonction orient de la manière suivante :

$$orient\ (b1) = 0\ \text{si le câble part vers l'avant,}$$

$$orient\ (b1) = 1\ \text{si le câble part vers l'arrière.}$$

Coudes

$\alpha$) On considère ici une liaison entre une borne b1 et une borne b2. Dans le cas où il n'y a pas de liaisons verticales, la présence d'un coude du côté b1 est donnée par l'équation suivante :

$$coude(b1, b2\ ;\ b1) = |orient(b1) - delta(b1, b2)|$$

La présence d'un coude du côté b2 est donnée par l'équation suivante :

$$coude(b1, b2\ ;\ b2) = |orient(b2) - delta(b2, b1)|$$

On détermine ensuite la position du coude. Ainsi, si une liaison entre les bornes b1 et b2 présente un coude du côté b1 sur la ligne verticale k, on aura alors :

$$coude(b1, b2\ ;\ b1\ ;\ k) = 1\ \text{si le coude est sur la verticale k, 0 sinon.}$$

On a donc pour un coude côté b1 à la verticale k et pour un coude côté b2 à la verticale k, les deux équations suivantes :

$$Vk\ coude(b1, b2\ ;\ b1\ ;\ k) = ISX(b1, k).coude\ (b1, b2\ ;\ b1)$$

$$Vk\ coude(b1, b2\ ;\ b2\ ;\ k) = ISX(b2, k).coude\ (b1, b2\ ;\ b2)$$

Une telle fonction est alors implémentée à l'aide des contraintes suivantes pour le côté b1 :

$$coude(b1, b2\ ;\ b1) \geq orient(b1) - delta(b1, b2)$$

$$coude(b1, b2\ ;\ b1) \geq delta(b1, b2) - orient(b1)$$

$$Vk\ coude(b1, b2\ ;\ b1\ ;\ k) \geq coude(b1, b2\ ;\ b1\ ) + ISX(b1, k) - 1$$

On réalise une implémentation similaire pour le côté b2.
$\beta$) Dans le cas où des connexions verticales sont prévues, la présence d'un coude du côté b1, respectivement b2, est donnée par les équations suivantes :

$$coude(b1, b2\ ;\ b1) = deq(b1, b2)|orient(b1)-delta(b1,b2)|$$

$$coude(b1, b2\ ;\ b2) = deq(b1, b2)|orient(b2)-delta(b2,b1)|$$

De même que précédemment, on a :

$$Vk \; coude(b1, b2 ; b1 ; k) = ISX(b1, k).coude \; (b1, b2 ; b1)$$

(coude côté b1 à la verticale k)

$$\forall k \; coude(b1, b2 ; b2 ; k) = ISX(b2, k).coude \; (b1, b2 ; b2)$$

(coude côté b2 à la verticale k)

Cette fonction est implémentée à l'aide des contraintes suivantes pour le côté b1 :

$$coude(b1, b2 ; b1 ) \geq deq(b1, b2) + (orient(b1) - delta(b1, b2)) - 1$$

$$coude(b1, b2 ; b1) \geq deq(b1, b2) - (orient(b1) - delta(b1, b2)) - 1$$

$$\forall k \; coude(b1, b2 ; b1 ; k) \geq coude(b1, b2 ; b1 ) + ISX(b1, k) - 1$$

On réalise une implémentation similaire pour le côté b2.

Une connexion verticale avec des orientations correctes compte pour un coude, deux sinon.

$$CoudeVert(b1, b2) = (1 - deq(b1, b2))(1+|orient(b2)-delta(b2, b1)|)$$

implémenté à l'aide des contraintes :

$$CoudeVert(b1, b2) \geq 2(1-deq(b1, b2)) + (orient(b2) - delta(b2, b1)) - 1$$

$$CoudeVert(b1, b2) \geq 2(1 - deq(b1, b2) - (orient(b2) - delta(b2, b1)) - 1$$

Les équations ci-dessus ne sont à générer que pour un des couples (x1, x2) et (x2, x1).

Points de passage

Il se crée un point de passage à la verticale k pour la connexion entre x1 et x2 si :

$$X(x1) \leq k - 1 \; et \; X(x2) \geq k+1 \; ou \; X(x1) \geq k+1 \; et \; X(x2) \leq k-1$$

soit :

$$Passage(x1,x2 ; k)=SS(x1,k-1)(1-SS(x2,k)) + SS(x2,k-1)(1-SS(x1 ,k))$$

implémenté sous la forme :

$$Passage(x1, x2 ; k) \geq SS(x1, k -1) + (1 - SS(x2, k)) - 1$$

$$Passage(x1, x2 ; k) \geq SS(x2, k -1) + (1 - SS(x1, k)) - 1$$

Il peut se créer également un point de passage si x1 et x2 sont sur la même verticale avec des orientations différentes :

$$PVert(x1, x2) = (1 - deq(x1, x2))|orient(x1)-orient(x2)|$$

$$\forall k \; PVert(x1, x2 \; ; k) = ISK(x1,k)PVert(x1,x2)$$

implémenté sous la forme :

$$PVert(x1, x2) \geq (1-deq(x1, x2)) + (orient\,(x1) - orient\,(x2))-1$$

$$PVert(x1, x2) \geq (1-deq(x1, x2)) - (orient\,(x1) - orient\,(x2))-1$$

$$\forall k \; PVertK(x1, x2 \; ; k) \geq PVert(x1, x2) + ISK(x1, k) -1$$

Les équations ci-dessus ne sont à générer que pour un des couples (x1, x2) et (x2, x1).

<u>Contraintes de taille en hauteur</u>

On s'intéresse à la place en hauteur occupée par les composants.
On considère tout d'abord un composant x de type 1. On suppose qu'un composant de ce type comporte des prises. Soit p une telle prise. On appelle $Pr_0$ la fonction indiquant si une prise est présente sur le côté droit. La fonction $Nb_0$ indique le nombre de bornes sur le côté droit. On a alors :
$Pr_0(x, p) = 1$ si au moins une borne de la prise p est sur le côté droit, 0 sinon.

$$Nb_0(x, p) = \text{nombre de bornes sur le côté droit}$$

$$V \text{ borne } b \in p, \; Pro(x, p) \geq 1 - orient(b)$$

$$Nb_0(x, p) = \sum_{b \in p} (1 - orient(b))$$

Pour le côté gauche on aura :

$$Pr_1(x, p) = 1$$

si au moins une borne de la prise p est sur le côté gauche, 0 sinon.

$$Nb_1(x, p) = \text{nombre de bornes sur le côté gauche}$$

$$\forall \text{ borne } b \in p, \; Pr_1(x, p) \geq orient(b)$$

$$Nb_1(x, p) = \sum_{b \in p} orient(b)$$

Si on considère que H(x) est la hauteur du composant x, cette hauteur est le maximum des hauteurs de chaque côté du composant x. On a donc :

$$H(x) \geq \sum_{p \in x} (Nb_0(x, p) + 2Pr_0(x, p)) + HauteurTexte(x)$$

$$H(x) \geq \sum_{p \in x} (Nb_1(x, p) + 2Pr_1(x, p)) + HauteurTexte(x)$$

Si l'on considère maintenant tous les composants, c'est-à-dire ceux d'un type différent du type 1, et que l'on souhaite savoir quelle est la hauteur occupée par ces composants sur une ligne k, on a alors l'équation suivante :

$$E_k = \sum_{x, type(x) \neq 1} ISX(x, k).Size(x) + \sum_{x, type(x) = 1} H(x, k)$$

où $E_k$ est la hauteur occupée par tous les composants sur la ligne verticale k et Size(x) est la hauteur d'un composant x qui n'est pas de type 1.

De la même manière, on définit la place occupée par les coudes de la manière suivante :

$$C_k = \sum_{x1 \leftrightarrow x2} (Coude(x1, x2 ; x1 ; k) + Coude(x1, x2 ; x2 ; k)),$$

Et celle occupée par les points de passage :

$$P_k = \sum_{x1 \leftrightarrow x2} Passage(x1, x2 ; k) \text{ (pas de connexions verticales)}$$

$$P_k = \sum_{x1 \leftrightarrow x2} (Passage(x1, x2 ; k) + PVertK(x1, x2 ; k)) \text{ (sinon)}$$

La contrainte globale s'écrit donc :

$$\forall k \; E_k + W_{coude}C_k + W_{pass}P_k \leq HauteurFeuille$$

$W_{coude}$ et $W_{pass}$ sont par exemple fixés à 1.

En fonction des types de composants devant figurer sur le schéma, des contraintes supplémentaires pourront apparaître. Ces contraintes seront transcrites sous forme d'équations linéaires qui viendront s'ajouter à des équations du type de celles définies ci-dessus.

Dans cette première passe, il est également prévu d'optimiser le classement relatif dans le sens horizontal des composants en limitant par exemple le nombre de coudes et de points de passage. On propose alors, comme contrainte complémentaire, dans le cas où il n'y a pas de connexions verticales, d'optimiser la fonction suivante :

$$C_1 \sum_{e \leftrightarrow e'} \sum_{k} (coude(e, e' ; e ; k) + coude(e, e' ; e' ; k)) + C_2 \sum_{e \leftrightarrow e'} \sum_{k} Passage(e, e' ; k)$$

avec par exemple $C_1 = 20$ et $C_2 = 1$.

Avec des connexions verticales, on minimise par exemple la fonction suivante :

$$C_1 \sum_{e \leftrightarrow e'} \sum_k (\text{coude}(e, e'; e; k) + \text{coude}(e, e'; e'; k) + \text{CoudeVert}(e, e'))$$

$$+ C_2 \sum_{e \leftrightarrow e'} \sum_k \text{Passage}(e, e'; k)$$

avec par exemple $C_1 = 20$ et $C_2 = 1$.

La résolution du système reprenant les équations énoncées ci-dessus avec les diverses contraintes permet de déterminer pour chaque composant x et toutes les lignes verticales k, toutes les valeurs de la fonction ISX(x, k).

La résolution de ce système d'équations avec les contraintes permet également de connaître l'orientation des divers composants x. On connaît donc pour chaque borne b d'un composant x les valeurs de la fonction orient(b).

<u>Post-traitement relatif aux gaines</u>

L'objet de ce post-traitement est de faire apparaître les gaines proches des composants auxquels elles sont connectées. On va donc laisser les composants, ou plus précisément les boîtes les représentant, sur leurs verticales et les bouger en bloc tandis que les gaines vont "flotter" individuellement tout en respectant les contraintes d'ordonnancement issues de la résolution du système d'équations ci-dessus. Ainsi l'optimisation des coudes faite précédemment reste valable.

Les verticales 0, ..., XMAX vont se déplacer aux coordonnées $X_0$, ..., $X_{XMAX}$ (variables entières). Pour garder l'ordonnancement, on a donc la contrainte suivante :

$$\forall i \leq 1 \; X_i \geq X_{i-1} + \delta_{i-1}$$

avec $\delta_{i-1}$ valant 1 si la verticale i - 1 a au moins un composant qui n'est pas une gaine, 0 sinon (on ne s'occupe pas des verticales ne contenant que des gaines).

De plus entre deux verticales principales il n'y a soit rien, soit au moins deux sous-verticales, de telle sorte qu'une gaine apparaisse proche d'un composant. On doit avoir $(X_i - X_{i-1})$ inférieur ou égal à 1, supérieur ou égal à 3, mais pas égal à 2. On utilise donc des variables binaires $ISB_i$ avec les contraintes suivantes :

$$X_i - X_{i-1} \leq 1 + ISB_i \cdot XMAX$$

$$X_i - X_{i-1} \geq 3 - (1 - ISB_i) \cdot XMAX$$

Chaque gaine g aura une nouvelle coordonnée $x_g$ (variable entière). Les gaines doivent respecter les contraintes d'ordonnancement définies pour les composants x. Pour tous les composants amont (non gaines) auxquels une gaine g est connectée, si $x_0(g)$ est la plus grande coordonnée de ces composants, on a :

$$x_g \geq X_{x0(g)} + 1$$

De même, pour tous les composants aval (non gaines) auxquels la gaine g est connectée, si $x_1(g)$ est la plus petite coordonnée de ces composants, on a :

$$x_g \leq X_{x1(g)} - 1$$

Pour toutes les gaines g' auxquelles elle est connectée en amont :

$$x_g \geq x_{g'} + 1$$

et pour les gaines en aval :

$$x_g \leq x_{g'} - 1$$

Les gaines ne doivent pas non plus se trouver sur les verticales contenant les composants. Si $x_1$ (g) - $x_0$ (g) $\geq 2$, on doit donc avoir aussi :

$$\forall x\ x_0\ (g) + 1 \leq x \leq x_1\ (g) -1 \qquad x_g \leq -1 + (XMAX +1) .d_{g,x}$$

$$\forall x\ x_0\ (g) + 1 \leq x \leq x_1\ (g) - 1 \qquad x_g \geq 1 - XMAX(1 - dg,_x)$$

$d_{g,x}$ étant une variable binaire valant 0 si $x_g < x$ et 1 si $x_g > x$.

La nouvelle variable xmsheet (nombre maximal de verticales à l'intérieur d'une feuille) sera récupérée à l'aide de la contrainte suivante :

$$\forall k\ xmsheet \geq X_{(k+1)XMAXSHEET} - X_{k.XMAXSHEET}$$

où XMAXSHEET est le nombre maximal de verticales par composant.

Pour tous les composants amont (qui ne sont pas des gaines) auxquels une gaine (g) est connectée par ses points de passage, $x'_o(g)$ est la plus grande coordonnée de ces composants, ainsi que $x'_i(g)$ pour les composants aval. On minimise alors la fonction :

$$K_1 \sum_g \min(x_g - X_{x'_0(g)}, X_{x'1(g)} - x_g) + K_2 . xmsheet$$

avec par exemple $K_1 = 20$ et $K_2 = 1$.

**Seconde passe**

Alors que la première passe s'occupe du classement relatif des boîtes dans le sens horizontal, la seconde passe a pour but de placer les boîtes relativement les unes aux autres dans le sens vertical. Cet ordonnancement vertical a une influence sur les croisements entre les liaisons 6 reliant les boîtes 4. Cette seconde passe a pour but d'une part de disposer les boîtes sur chacune des lignes verticales du schéma (disposition relative) et d'autre part de disposer les unes par rapport aux autres les bornes à l'intérieur de chaque boîte. La position relative des boîtes et des bornes sera choisie de manière à minimiser le nombre d'intersections entre les liaisons 6.

Représentation de l'ordonnancement des bornes

Soient sur une même ligne verticale deux ordonnées x et y, on définit une fonction d par analogie avec la fonction delta de la première passe. d est définie de la manière suivante :

$$d(x, y) = 0\ si\ x < y\ et\ d(x, y) = 1\ si\ x > y$$

(x et y étant entiers, le cas x = y étant exclu)

On a x - y = (2d(x, y) - 1) (1 + (M - 1)u),
M étant la borne supérieure de |x - y| et u une variable intermédiaire continue dans [0,1] exprimant que (x - y) est dans [- M, - 1] si d(x, y) = 0 ou dans [1, M] si d(x, y) = 1

Des contraintes liées à la fonction d(x, y) sont alors les suivantes :

$$x - y - 2d(x, y) - 2(M - 1)v - (M - 1)u = - 1$$

$$v \leq d(x, y) \ (v \text{ représente } xy)$$

$$v \leq u$$

$$v \geq d(x, y) + u - 1$$

$$0 \leq u \leq 1$$

$$0 \leq d(x, y) \leq 1$$

$$0 \leq v \leq 1$$

<u>Groupage de bornes</u>

On considère ici un composant d'un type donné pour lequel il existe un ensemble B de bornes b, se trouvant toutes sur une même colonne, et toutes les bornes de l'ensemble B devant rester groupées. Pour traduire cette contrainte, on peut considérer que toutes les bornes de B sont ordonnées de la même manière par rapport à chacune des bornes n'appartenant pas à B. Ainsi, aucune borne n'appartenant pas à B ne peut venir s'intercaler entre deux bornes appartenant à B. On a alors l'équation suivante :

$$\forall b, b' \in B, \ \forall (e, q, c), X_e = X_b, c \notin B, d(y_b, y_{e, q, c}) = d(y_{b'}, y_{e, q, c})$$

$(e, q, c)$ représente ici une borne.
$e$ correspond au composant auquel appartient la borne,
$q$ est éventuellement la prise sur laquelle se trouve la borne et
$c$ le nom de cette borne.

<u>Optimisation des intersections</u>

$\alpha$) Intersections entre connexions horizontales :
On considère que toutes les orientations sont faites de manière idéale (par rapport au sens des connexions). Soient $(e, p, b)$ une borne d'abscisse $x$ et $(f, q, c)$ une borne d'abscisse $x + 1$, avec $(e, p, b) \leftrightarrow (f, q, c)$, l'expression :

$$D(e, p, b ; f, q, c) = \sum_{(e',p',b') \leftrightarrow (f',q',c'), x_{e'} = x_e, x_{f'} = x_f} \left| d(y_{e, p, b}, y_{e', p', b'}) - d(y_{f, q, c}, y_{f', q', c'}) \right|$$

va compter le nombre de câbles qui intersectent la liaison $(e, p, b) \leftrightarrow (f, q, c)$.
Il faut minimiser :

$$NHH = \sum_{x} \sum_{(e,p,b) \leftrightarrow (f,q,c), x_e = x, x_f = x+1} D(e, p, b ; f, q, c)$$

$\beta$) Intersections entre connexions verticales :
Si sur la même verticale, il y a des connexions entre les bornes $b_1$ et $b_2$ d'une part et entre les bornes $c_1$ et

$c_2$ d'autre part, pour que les connexions ne s'intersectent pas, il faut que :

$$[d(b_1, c_1) + d(b_1, c_2) + d(b_2, c_1) + d(b_2, c_2)] \text{ soit un nombre pair.}$$

Si N vaut 0 ou 4, les connexions sont complètement disjointes.

Si N vaut 2, l'une est à l'intérieur de l'autre. On écrit donc :

$$d(b_1, c_1)+d(b_1, c_2)+d(b_2, c_1)+d(b_2, c_2) = 2A(b_1, b_2, c_1, c_2)+B(b_1, b_2, c_1, c_2)$$

avec $A(b_1, b_2, c_1, c_2)$ et $B(b_1, b_2, c_1, c_2)$ déclarées comme variables entières ($A(b_1, b_2, c_1, c_2) \leq 2$ et $B(b_1, b_2, c_1, c_2) \leq 1$) et on ajoute $B(b_1, b_2, c_1, c_2)$ à la fonction de coût.

Le nombre total d'intersections entre verticales est donc :

$$NVV = \sum_x \sum_{orient} \sum_{b_1 \leftrightarrow b_2, c_1 \leftrightarrow c_2} B(b_1, b_2, c_1, c_2)$$

$\gamma$)Intersections entre connexions verticales et connexions horizontales :

S'il y a une connexion verticale entre les bornes $b_1$ et $b_2$ et si une connexion horizontale part de la borne $c_1$, pour que les connexions ne s'intersectent pas, il faut que $d(b_1, c_1) = d(b_2, c_1)$

On ajoute donc $|d(b_1, c_1) - d(b_2, c_1)|$ à la fonction de coût :

$$IVH(b_1, b_2, c_1) + d(b_1, c_1) - d(b_1, c_2) \geq 0$$

$$IVH(b_1, b_2, c_1) - d(b_1, c_1) + d(b_1, c_2) \geq 0$$

Le nombre total d'intersections entre verticales et horizontales est donc :

$$NVH = \sum_x \sum_{orient} \sum_{b_1 \leftrightarrow b_2, c_1} IVH(b_1, b_2, c_1)$$

$\delta$) Connexions lointaines et coudes :

Pour les connexions dites "lointaines" ($x_f - x_e \geq 2$), on crée des points de passage intermédiaires (composants virtuels) et on se ramène au cas ci-dessus.

Pour les bornes dont l'orientation est en contradiction avec la direction de la connexion, il faut créer un point de passage virtuel pour le coude (groupé avec le composant) et remplacer la borne par ce point de passage dans la formule ci-dessus.

Dans ce cas, l'ordre respectif des points de passages virtuels et de leurs bornes associées doit être traité de la même manière que pour une connexion entre deux bornes d'un même composant.

Groupage des câbles multifilaires

Dans le cas d'un câble multifilaire, il est préférable de grouper l'ensemble des fils formant le câble correspondant. Toutefois, dans certains cas, il y a des risques d'infaisabilité. Bien entendu, il est préférable que toutes les bornes b d'un ensemble B de bornes restent accolées les unes aux autres. Toutefois, dans certains cas, comme pour l'exemple des câbles multifilaires, on peut tolérer qu'une borne vienne s'intercaler entre deux bornes d'un même ensemble B. On parle alors par exemple de groupage "faible".

Dans de tels cas, on peut compter le nombre de fois où les bornes extérieures viennent s'intercaler à l'intérieur de l'ensemble B. Soit $P_{blind}$ ce nombre.

On aura :

$$P_{blind} = \sum_{b,b' \in B} \sum_{c \notin B, x_c = x_b} \left| d(y_b, y_c) - d(y_{b'}, y_c) \right|$$

Dans la fonction de coût à optimiser, concernant le nombre d'intersections, ce nombre pourra apparaître comme une pénalité.

En fonction des différents types de composants, des contraintes supplémentaires peuvent apparaître. En fonction des types de composants définis, ces contraintes seront mises sous forme d'équations comme montré plus haut.

Fonction de coût

On minimise $C_1 NHH + C_2 NVV + C_3 NVH + C_4 P_{blind}$

Par exemple $C_1 = C_2 = C_3 = C_4 = 1$

D'autres contraintes peuvent bien entendu être implémentées sous forme d'équations. Ceci dépend bien entendu du type des composants pouvant être représentés. Ces différentes contraintes pourront aussi apparaître au niveau de la fonction de coût ci-dessus.

Il est aussi possible de simplifier le système à optimiser et de le découper en deux sous-systèmes.

Dans le paquet d'équations décrit au paragraphe "représentation de l'ordonnancement des bornes", un couple de bornes (b, b') sera de fait ordonnancé par d(e, e'), e et e' étant les entités "différentiantes" pour b et b'. Par conséquent, il peut y avoir plusieurs couples (b, b') pour un même d(e, e'). Il suffit d'en prendre un seul pour avoir des définitions correctes pour le d(e, e'). La procédure à utiliser est donc la suivante :

1) Constituer une table $T_{e, e'} = \{(b, b') : d(b, b') \equiv d(e, e')\}$ et une table $B_{b,b'} = \{(b, b') : d(d, d') \equiv d(e, e')\}$

2) Pour chaque (e, e') dans T, générer le paquet d'équations décrit au paragraphe "représentation de l'ordonnancement des bornes" pour un des (b, b') de $T_{e,e'}$ (typiquement le premier), ainsi que toutes les autres contraintes.

3) Optimiser le système ainsi obtenu pour la fonction de coût. On a ainsi des d(e,e') corrects mais des altitudes "floues".

4) Relire les d(e, e') obtenus. Pour chaque couple (b, b'), générer la contrainte $y_b \leq y_{b'} - 1$ si d(b, b') (i.e. $d(B_{e, e'})$) est nul ou $y_b \geq y_{b'} + 1$ dans le cas contraire.

5) Minimiser le max des $y_b$ : $\forall$ b, $ym \geq y_b$ et min : ym

**Troisième passe**

L'optimisation des fonctions de coût définie aux première et seconde passes a permis de réaliser un placement relatif de tous les composants à représenter sur le schéma de câblage. Cette troisième passe a alors pour but de réaliser un placement absolu des composants dans le sens vertical en respectant les contraintes de comportement correspondant aux types des composants disposés sur une même verticale.

De même que pour le placement horizontal des composants, on a prévu un nombre limité de lignes verticales sur lesquelles sont disposés les composants. On prévoit ainsi que les bornes sont placées à des altitudes qui sont un nombre entier de pas de grille. Pour minimiser le nombre de décrochages au niveau des liaisons, et donc également le nombre de coudes, on minimise le nombre de cas où de bornes connectées l'une à l'autre ne se trouvent pas à la même altitude.

Contraintes

Pour des composants, comme on peut le voir sur la figure 1, le texte correspondant est placé en dessous de celui-ci. On appelle :

$txt_{e_k}$ l'altitude du texte du composant $e_k$,
$top_{e_k}$ l'altitude du sommet du composant $e_k$, et
$low_{e_k}$ l'altitude inférieure du composant $e_k$.

On a alors les contraintes suivantes :

$$txt_{e_k} \geq top_{e_{k-1}} + D_{min}, \quad D_{min} \text{ étant la distance minimale séparant deux}$$

composants.

$$low_{e_k} = txt_{e_k} + HauteurTexte(e_k)$$

Entre deux bornes, en posant :

$$\Delta_-(b_j) = min(\Delta_-(b_j, 0), \Delta_-(b_j, 1))$$

et

$$\Delta_+(b_j) = max(\Delta_+(b_j, 0), \Delta_+(b_j, 1))$$

et

$$y_{b_j} + \Delta_-(b_j)DeltaBorne \geq y_{b_{j-1}} + \Delta_+(b_{j-1})DeltaBorne[+ \text{ Delta Prise}]$$

si le composant, ou la boîte qui le représente, peut être étiré

$$y_{b_j} = y_{b_{j-1}} + DeltaBorne [+ \text{ Delta Prise}] \text{ sinon.}$$

Cela dépend du type de composant et est fixé par les spécifications de comportement.

Le terme DeltaPrise n'est présent que si $b_{j-1}$ est la dernière borne de la prise précédente et $b_j$ la première de la prise en cours de traitement. C'est la distance entre prises. Elle dépend du type du composant.

Pour la dernière borne du composant, nous avons en plus :

$$tope = y_{b_{last}} + C, C$$

étant fixé par les spécifications définissant le composant en fonction de son type.

L'étirement effectif d'un composant est :

$$ETIR_e = top_e - low_e - size(e)$$

La hauteur effectivement utilisée à l'intérieur d'une feuille s est :

$$HEIGHT_s = \max_{s.XMAXSHEET \leq k \leq (s+1)XMAXSHEET} \max_{X(e)=k} top_e$$

Les $y_{b_i}$ sont des variables entières.

Si le composant n'est pas étirable, la première borne de chaque prise est déclarée entière, sinon elles le sont toutes.

Optimisation

Le critère principal est le nombre de décrochages.

Pour chaque connexion (b, b') de bornes figurant sur deux verticales consécutives et connectées entre elles, on définit D(b, b'), variable binaire par :

$$HauteurMax.D(b,b') + y_b - y_{b'} \geq 0$$

$$\text{HauteurMax}.D(b,b') - y_b + y_{b'} \geq 0$$

D(b, b') vaudra donc 0 s'il n'y a pas de décrochage, 1 sinon.

Un critère secondaire, rajouté après-coup, est la longueur des composants qui ne doivent pas être étirés indéfiniment sans nécessité.

La fonction de coût est donc :

$$W_1 \sum_{b \leftrightarrow b'} D(b,b') + W_2 \sum_{e \text{ étirable}} ETIR_e + W_3 \sum_s HEIGHT_s$$

$W_1$ est fixé par exemple au produit du nombre des composants étirables par le nombre des feuilles, $W_2$ prend par exemple la valeur du nombre de feuilles et $W_3$ vaut par exemple $\frac{1}{HauteurMax}$

**Quatrième passe**

Le but de cette quatrième et dernière passe est de réaliser le placement absolu des composants également maintenant sur l'horizontal. On s'intéresse ici plus particulièrement au routage des câbles et au placement des textes.

Routage des câbles

Connexions :

Soient $(y_i, z_i)$ les altitudes connues des bornes impliquées dans une liaison $C_i$ aux verticales $t$ et $t + 1$.

Soient $(y_j, z_j)$ les altitudes connues des bornes impliquées dans une liaison $C_j$ aux verticales $t$ et $t + 1$.

$P_i$ et $P_j$ sont les abscisses des points de passage que l'on cherche à déterminer.

Les connexions sont triées par altitude : $y_i < y_j$ si $i < j$.

On examine tous les couples $\{C_i, C_j\}$ avec $i < j$.

Les contraintes de base s'écrivent alors de la manière suivante :

$$P_i\text{-}P_j = Z_{ij}(2D_{ij} - 1)\,(1 + (M - 1)U_{ij})$$

où :

$$D_{ij} = 0 \text{ si } P_i < P_j,\ 1 \text{ si } P_i > P_j \text{ et indifférent si } P_i = P_j.$$

$$Z_{ij} = 0 \text{ si } P_i = P_j,\ 1 \text{ sinon.}$$

M est le maximum possible de $|P_i\text{-}P_j|$ pour tous les $(i, j)$ possibles (c'est une constante connue par avance).

$U_{ij}$ est une variable intermédiaire continue dans $[0, 1]$ utilisée pour implémenter le fait que $P_i - P_j$ est dans $[-M, -1]$ si $D_{ij} = 0$, dans $[1, M]$ si $D_{ij} = 1$ ou $P_i = P_j$ si $Z_{ij} = 0$.

Le produit $Z_{ij}D_{ij}$ est implémenté par :

$$ZD_{ij} \leq Z_{ij}$$

$$ZD_{ij} \leq D_{ij}$$

$$ZD_{ij} \geq Z_{ij} + D_{ij} - 1$$

De même pour $Z_{ij}U_{ij}$ :

$$ZU_{ij} \leq Z_{ij}$$

$$ZU_{ij} \leq U_{ij}$$

$$ZU_{ij} \geq Z_{ij} + U_{ij} - 1$$

Le produit $Z_{ij}D_{ij}U_{ij}$ est alors implémenté par :

$$ZDU_{ij} \leq Z_{ij}$$

$$ZDU_{ij} \leq D_{ij}$$

$$ZDU_{ij} \leq U_{ij}$$

$$ZDU_{ij} \geq Z_{ij} + D_{ij} + U_{ij} - 2$$

La contrainte globale s'écrit finalement :

$$P_i - P_j = - Z_{ij} + 2ZD_{ij} - (M - 1)ZU_{ij} + 2(M - 1)ZDU_{ij}$$

Si $y_i = z_i$, il n'y a pas besoin de point de passage, la liaison $C_i$ est

horizontale.
Si $[y_i, z_i]$ n'intersecte pas $[y_j, Z_j]$, il n'y a rien à faire pour le couple $\{C_i, C_j\}$.
Si $[y_i, z_i]$ intersecte $[y_j, z_j]$, on doit avoir $Z_{ij} = 1$. Les points de passage doivent se trouver à des endroits différents, sinon les verticales se chevaucheraient et on aurait un recouvrement (overlap en anglais) vertical.
De même, quand $y_i = z_j$, il y a un recouvrement horizontal si $P_i \leq P_j - 1$, c'est-à-dire $D_{ij} = 1$ et $Z_{ij} = 1$.
Soit $OV_{ij}$ le variable indiquant s'il y a recouvrement horizontal ou non pour les liaisons $C_i$ et $C_j$.

$$OV_{ij} \geq D_{ij} + Z_{ij} - 1$$

De même quand $y_j = z_j$, il y a recouvrement horizontal si $P_j \leq P_i - 1$, c'est-à-dire $D_{ij} = 0$ et $Z_{ij} = 1$.

$$OV_{ij} \geq (1 - D_{ij}) + Z_{ij} - 1$$

On détermine également une variable $INT_{ij}$ pour définir les intersections entre $C_i$ et $C_j$.
Si les liaisons $C_i$ et $C_j$ vont dans des directions différentes, c'est-à-dire si :

$$z_i > y_i \text{ et } z_j < y_i \text{ ou } z_j < y_i \text{ et } z_j > y_j,$$

il y aura une intersection de toute façon.
Quand les deux liaisons $C_i$ et $C_j$ sont montantes, comme $y_i < y_j$, il y a intersection si $D_{ij} = 0$, soit :

$$INT_{ij} = 1 - D_{ij}$$

Pour optimiser le routage des câbles, on définit un point de passage maximum, appelé $P_{max}$, défini par :

$$\forall i \ P_{max} > P_i$$

On minimise alors la fonction :

$$K. \sum_{i<j} (OV_{ij} + INT_{ij}) + P_{max},$$

K étant une constante.

Vérification de la possibilité de placement des textes sur les câbles

On vérifie feuille par feuille qu'il est possible de placer les textes que l'on souhaite disposer dans chaque feuille.
Une première contrainte est que la place disponible pour mettre un texte est supérieure à la longueur du texte que l'on souhaite écrire. Cette contrainte peut s'écrire sous forme mathématique.

Contraintes

On le fait feuille par feuille. Pour une feuille :
On suppose alors que l'on a un ensemble de textes $\{T_1,..., T_{N_{txt}}\}$ et que pour chaque texte la suite des plages possibles de placement est :

$$P_t = \{(x_{t,1}, x'_{t,1}) ,...., (x_{t,nt}, x'_{t,nt})\}.$$

De plus, chaque texte est composé de $m_t$ morceaux de longueur $L_{t,1}, ..., L_{t,mt}$. Les $x_{i,j}$ sont des coordonnées relatives représentées par des nombres entiers. Pour avoir un placement absolu, il faudra associer à chaque intervalle $[x, x+1]$ un facteur $F_x$, avec $F_x = 1$ éventuellement.
La longueur effective de la plage $(x_{t,i}, x'_{t,i})$, c'est-à-dire la place disponible, est alors :

$$\sum_{x=x_{t,i}}^{x'_{t,i}-1} F_x$$

Pour placer chaque morceau m de chaque texte $T_t$, il faudra avoir $n_t$ variables binaires $\tau_{t, m, i}$ qui vaudront 1 si le morceau est sur la plage i et 0 sinon. Les contraintes pour avoir chaque morceau de $T_t$ placé seront donc :

$$\forall t \ \forall m \in [1, m_t] \ \sum_{i=1}^{n_t} \tau_{t,m,i} = 1$$

On indique que la place disponible est supérieure à la place nécessaire pour écrire le texte souhaité par :

$$\forall t \ \forall i \in [1, n_t] \ \sum_{x=x_{t,i}}^{x'_{t,i}-1} F_x \geq \sum_{m=1}^{m_t} \tau_{t,m,i} (L_{t, m} + EspaceSupp)$$

EspaceSupp est une constante prédéterminée, par exemple en fonction de la taille des caractères utilisés.

On a également :

$$\sum_{x=0}^{XMAXSHEET-1} F_x = LongueurFeuille$$

Selon les textes que l'on souhaite écrire, et selon l'emplacement où l'on souhaite les placer, d'autres contraintes devront éventuellement être mentionnées.

Il est possible que les textes que l'on souhaite mentionner soient trop grands pour le schéma de câblage correspondant. Il y a alors infaisabilité : le problème ne peut être résolu. Dans ce cas, le calcul peut être repris depuis le départ en diminuant le nombre de lignes verticales par feuille de dessin et en augmentant le nombre de feuilles de dessin.

**Positionnement des textes sur les câbles**

Il s'agit là d'une étape qui peut être intégrée à la quatrième passe ou qui, au contraire, peut être réalisée tout à fait indépendamment du procédé de réalisation d'un schéma de câblage décrit ici. On peut envisager deux logiciels entièrement distincts : l'un pour la réalisation du schéma de câblage et l'autre pour la mise en place des textes sur les câbles.

Les objets élémentaires de la feuille considérés ici sont appelés des fils. L'ensemble de tous les fils sur une feuille est appelé F et $f \in F$ signifie que f est un fil sur la feuille donnée. nbfil est le nombre total de fils sur la feuille. On considère qu'il existe un ordre f< f' entre les fils $f \in F$.

Certains fils peuvent appartenir à des structures plus complexes, appelées les câbles. On appelle C l'ensemble des câbles sur la feuille. nbcable est le nombre total des câbles sur la feuille. Chaque fil peut n'appartenir qu'à un seul câble c et il existe éventuellement des fils qui n'appartiennent à aucun câble.

On distingue des fils avec une orientation x croissante, et des fils avec des retours, qu'on appelle non-orientés. On utilise la notation $f \in o$ pour un fil orienté et $f \in no$ pour un fil non-orienté.

On dispose de deux classes de câbles. La première est constituée de câbles où l'on peut fusionner les textes du type 1, la seconde regroupe les câbles où l'on peut fusionner simultanément les textes de types 1 et 2. On notera $c \in 1$, respectivement $c \in 2$, les câbles de la classe 1 et 2.

Les segments

A chaque fil on associe un ensemble de segments.

nbseg(f) est le nombre de segments du fil f.

Les segments sont les places réservées aux textes. Chaque texte associé à un fil doit apparaître une et une seule fois dans un des segments de ce fil. Comme aucun texte ne se place sur une partie verticale d'un fil, les segments sont des sous-intervalles définis par les parties horizontales de chaque fil. Les coordonnées des segments doivent être déterminées à partir du résultat de la quatrième passe. La construction se base sur le graphe du fil, qui se décrit par la liste des liaisons entre les noeuds de début, de fin et de coude, auxquels s'ajoutent les noeuds de croisement du fil par d'autres fils. Les segments sont ainsi formés des parties horizontales consécutives entre les noeuds du graphe, tout en respectant la distance de sécurité d aux différents noeuds.

On introduit pour un segment s les bornes gauche(s), droite(s) et la hauteur haute(s) pour lesquelles on identifie s géométriquement comme étant la ligne droite horizontale entre les points (x, y) = (gauche(s), haute(s)) et (x, y) = (droite(s),haute(s)). On constate que :

$$0 \leq gauche(s) < droite(s) \leq L$$

L étant la longueur de la feuille.

On introduit pour chaque fil f les bornes maximales

$$gauche(f) := \min_{s \subset f} gauche(s), \quad droite(f) := \max_{s \subset f} droite(s)$$

Pour l'abscisse x d'un texte t $\in$ f on doit avoir gauche(f) $\leq$ x $\leq$ droite(f).

On suppose que l'ensemble de segments s sur un fil f est ordonné par une relation s < s', qui peut être indépendante de l'ordre d'apparition des s sur le fil f.

### Les segments et le fusionnement des textes sur câbles

Les segments s d'un fil f appartenant à un câble c doivent être classés selon deux catégories, suivant qu'ils permettent ou non la fusion des textes 1 (respectivement 1 et 2). Les segments s permettant la fusion des textes sont nécessairement placés entre les deux gaines appartenant au câble c correspondant.

On considère que les segments associés aux câbles de classe 2, permettant la fusion des textes de type 1, sont les mêmes que ceux permettant la fusion des textes de types 1 et 2.

### Les types de texte

On doit placer sur les fils de la planche des textes dont on distingue dix types différents. Sur chaque fil f on doit placer nbtext (f) textes différents, avec donc nbtext(f) $\leq$ 10

On notera par t $\in$ f le fait qu'un texte de type t, t $\in$ {1, ..., 10}, est à placer sur le fil f. Par convention, l'ordre de la numérotation des types de texte suivra l'ordre préférentiel, à savoir : le type 1 est le numéro du câble, le type 2 est le type jauge et le type 3 est la couleur. Pour les autres types de texte on fixera de façon arbitraire, mais une fois pour toute, la convention (pour les types 4, 5 etc...).

### Structure de voisinage entre fils

Pour la préparation de la fonction coût on doit disposer d'une structure qui définit une relation de voisinage entre fils. On peut par exemple prévoir que les fils f et f sont voisins, noté f $\leftrightarrow$ f, s'il existe des segments s $\subset$ f et s' $\subset$ f' qui sont alignés dans le sens suivant :

1) Les intervalles I :=(gauche(s),droite(s)) et I' :=(gauche(s'),(droite(s')) ont une intersection non vide,
2) Aucun fil ne passe entre les segments s et s'
3) Au moins un type de texte t appartenant aux deux fils, t $\in$ f, t $\in$ f, rentre dans l'intersection I et I'
4) haut(s) $\neq$ haut(s'), ce qui évite qu'un fil ne soit son propre voisin.

Un fil f peut ne pas avoir de voisins, si dans les fils f qui se rapprochent de f, les segments alignés selon 1) et 2) ne laissent pas suffisamment de place pour les textes.

### Variables de décision

Il y a deux types de variables de décision : des variables réelles et des variables binaires. Des lettres latines (x et e) désignent les variables réelles et des lettres grecques ($\lambda$, w, $\gamma$, $\alpha$) les variables binaires ($\lambda$, w, $\gamma$, $\alpha \in$ {0, 1}).

### Variables continues de localisation des textes

Pour tout fil f et tout type de texte t à placer sur ce fil on introduit la variable :
x(f, t) = abscisse du centre du texte t sur le fil f.

On est conduit ainsi à des bornes naturelles :

$$\forall j \in f, \forall t \in f, \text{gauche } (j) \leq x (f, t) \leq \text{droite } (f).$$

### Variables binaires d'appartenance à un seqment

Pour tout fil f, tout type de texte t et tous segments s et f, on considère la variable binaire :
$\lambda$(f, t,s) = 1 si l'abscisse du texte t est placé dans le segment s du fil, 0 sinon.

Le nombre total de ces variables est :

$$\sum_{f \in F} \text{nbtext}(f).\text{nbseg}(f).$$

Une estimation de ce nombre est donnée par :

nbfil. nbtext. nbseg.

Variables binaires d'ordonnancement sur les fils

Pour tout fil f et pour toute paire de textes $t_1 < t_2$ on introduit la variable d'ordonnancement
$\omega(f, t_1, t_2) = 1$ si l'abscisse du texte $t_1$ est à gauche du texte $t_2$ et 0 sinon.
L'introduction de la variable $\omega(f, t_1, t_2)$ que si $t_1 < t_2$ permet de réduire le nombre de variables binaires total du problème d'optimisation.

Variables binaires associées au fusionnement de textes sur câble

Pour chaque câble on introduit une variable binaire :

$\gamma(c, 1) = 1$, si on fusionne les textes du type 1 sur les fils de c , 0 sinon.

Une deuxième variable binaire $\gamma(c, 2)$, sera ajoutée pour les câbles c de classe 2.

$\gamma(c, 2) = 1$ si on fusionne simultanément les textes 1 et 2 sur les fils de c et 0 sinon.

Variables binaires associées à l'alignement de textes

Pour toute paire de fils (f, f) telle que f< f et telle que f, f soient voisins, f $\leftrightarrow$ f', et pour tout type de texte t figurant dans la liste des deux fils, t $\in$ f, t $\in$ f, on introduit une variable binaire :

$\alpha(f, f, t) = 1$ si le texte t est aligné entre les fils f et f, 0 sinon

Contraintes du problème d'optimisation

Certaines contraintes sont présentées et mises en équation ci-après. D'autres contraintes peuvent être envisagées suivant les règles fixées.
$\alpha$) Garantie de présence des textes sur les fils

$$(C1) \quad \forall f \in F \quad \forall t \in f \quad \sum_{s \subset f, t \subset s} \lambda(f, t, s) = 1$$

Quel que soit le fil f et quel que soit le type de texte t associé à ce fil, t $\in$ f, le texte doit être positionné une et une seule fois sur un des segments s de ce fil f, pour lequel il est connu a priori que ce texte rentre.
$\beta$) Positionnement de textes sur un segment
Une deuxième classe (C2) de contraintes est de forme :

$$\forall f \in F, \forall t \in f, \forall s \subset f \text{ tel que } t \subset s$$

$$\text{gauche (f) } (1 - \lambda(f, t, s,)) + \text{gauche (s) } \lambda(f, t, s) \leq x(f, t) - \frac{\text{long(t)}}{2}.$$

$$x\,(f,\,t) + \frac{long(t)}{2} \le droite\,(f)\,(1 - \lambda\,(f,\,t,\,s)) + droite\,(s)\,\lambda(f,\,t,\,s).$$

La première de ces deux contraintes signifie que si le texte t du fil f se situe dans le segment s de ce fil, le côté gauche du texte t, (c'est-à-dire, x (f, t) - long (t) / 2,) doit être à droite du côté gauche, (c'est-à-dire gauche(s)), du segment même, bien que si t n'est pas dans ce segment, le côté gauche du texte soit au moins à droite du côté gauche, (c'est-à-dire gauche (f), ) du fil entier.

La deuxième contrainte exprime la même chose pour les côtés droits du segment et du texte.

$\gamma$) Placement relatif entre différents textes du même fil

Pour le placement relatif des textes d'un fil on considère les contraintes (C3) :

$$\forall\,f \in F,\,\forall\,s \subset f,\,\forall\,t,\,t' \in f,\,\text{tel que }t < t'\text{ et }t \subset s,\,t' \subset s$$

(ne pas mettre cette contrainte si $f \in c$, $c \in 2$, $t = 1$ et $t' = 2$)

$$\omega(f,t,t')\,\lambda(f,t,s)\,\lambda(f,t',s)\left[x(f,t) + \frac{long(t)}{2} + d - x(f,t') + \frac{long(t')}{2}\right] \le 0$$

$$(1 - \omega(f,t,t'))\,\lambda(f,t,s)\,\lambda(f,t',s)\left[x(f,t') + \frac{long(t')}{2} + d - x(f,t) + \frac{long(t)}{2}\right] \le 0$$

La première de ces deux contraintes dit que si les textes t et t' sont dans le même segment s du fil f, et si t doit être placé devant t', alors le côté droit de t doit être à gauche du côté gauche du texte t', tout en respectant une distance de sécurité d.

La contrainte (C3) est à enlever quand c est un câble de la classe 2, $f \in c$, et t, t' $\in$ f sont des types de texte 1 et 2. Dans ce cas, on tente de fusionner ces deux textes, et la contrainte (C3) devient contradictoire. Dans ce cas particulier, la contrainte (C3) sera remplacée par une contrainte conditionnelle.

Les contraintes (C3) sont non-linéaires telles qu'introduites. On utilise dans la suite une astuce pour les rendre linéaires. Cette astuce peut se décrire comme suit :

Soient $\beta_1$, ..., $\beta_r$ des variables binaires, x une variable réelle (ou discrète), avec borne supérieure connue, $x \le c$. Alors, on a l'équivalence de :

1) $X \le c_2$ sous condition que $\beta_1 = 1$, ..., $\beta_r = 1$
2) $\beta_1 \ldots \beta_r\,(x - c_2) \le 0$
3)

$$(x - c_2) \le \left(r - \sum_{i=1}^{r} \beta_i\right)\,\lvert c_1 - c_2 \rvert$$

Avec cette astuce, dont on se servira encore plus loin, les contraintes (C3) se traduisent par :

$$\forall f,\,\forall s \subset f,\,\forall t,\,t'\text{ tel que }t < t'\text{ et }t \subset s,\,t'\text{ c }s,$$

(ne pas mettre cette contrainte si $f \in c$, $c \in 2$, $t = 1$, $t' = 2$)

$$(x\,(f,\,t) + \frac{long(t)}{2}) + d - (x(f,\,t') - \frac{long(t')}{2}) \le L\,(3 - \omega\,(f,\,t,\,t') - \lambda(f,\,t,\,s) - \lambda,\,(f,\,t',\,s))$$

$$(x\,(f,\,t') + \frac{long(t')}{2}) + d - (x(f,\,t) - \frac{long(t)}{2}) \leq L\,(2 + \omega\,(f,\,t,\,t')) - \lambda(f,\,t,\,s) - \lambda\,(f,\,t',\,s))$$

δ) Alignement de textes

L'alignement de texte est géré par les variables α(f, f, t). Celles-ci viennent avec les contraintes (C 4) suivantes :

$$\forall f,\,f' \in F\,f < f'\,f \leftrightarrow f'$$

$$\alpha(f,\,f,\,t)\,(x\,(f,\,t) - x\,(f,\,t)) = 0$$

Si t est aligné entre f et f, alors les abscisses doivent être les mêmes dans les deux fils.

La forme linéaire est bien pour (C4)

$$\forall f,\,f' \in F\,f < f'\,f \leftrightarrow f$$

$$x\,(f,\,t) - x\,(f,\,t) \leq L\,(1 - \alpha\,(f,\,f',\,t))$$

$$x\,(f',\,t) - x\,(f,\,t) \leq L\,(1 - \alpha\,(f,\,f',\,t))$$

Fonction de coût

Comme plus haut, en fonction des contraintes décrites ci-dessus, on détermine une fonction de coût que l'on optimise pour obtenir le placement des textes.

De même que précédemment pour les quatre passes, les variables indiquées et les contraintes sont indiquées à titre illustratif pour montrer comment des équations peuvent être établies dans un procédé selon l'invention. D'autres variables peuvent être envisagées et d'autres contraintes correspondantes. Il se peut également que des variables et contraintes mentionnées ici soient inutiles pour certains cas de figure.

**Routes et piquages**

Il s'agit ici d'une application particulière au domaine de l'aéronautique. Les routes se présentent sous la forme de flèches partant d'un câble et auxquelles sont associés des textes donnant des informations sur ce câble.

De même que pour le placement des textes, il s'agit ici d'une application qui peut être intégrée, comme montré ci-après, au procédé de réalisation d'un schéma de câblage selon la présente invention mais cette application peut être aussi entièrement dissociée de ce procédé.

Introduction

Le placement des routes vient en dernier. Il y a un nombre astronomique de routes possibles. Il est impératif de réduire au maximum le nombre de ces possibilités. Les piquages sont avantageusement traités en même temps que les routes.

Détermination des routes candidates

Une route possible est un vecteur de six valeurs $<r,\,x,\,y_1,\,y_2,\,d,\,o>$

r est l'identifiant de la route.
x est la verticale sur laquelle se trouve la route.
$y_1$ est l'altitude du texte de la route (et du départ de la flèche).
$y_2$ est l'altitude de la fin de la flèche de la route.
d est la direction de la flèche (haut/bas).
o est le côté sur laquelle se trouve le texte de la flèche (gauche/droite).

Un piquage possible est un vecteur de cinq valeurs <r, x, $y_1$, $y_2$, d>

r est l'identifiant du piquage.
x est la verticale sur laquelle se trouve le piquage.
$y_1$ est l'altitude du départ de la flèche.

La deuxième ligne du piquage est au-dessous si la flèche part vers le haut, au-dessus dans le cas contraire.

$y_2$ est l'altitude de la fin de la flèche du piquage.
d est la direction de la flèche (haut/bas).

Le texte du piquage est toujours centré sur la flèche.

Calculs préliminaires

Une matrice M correspondant au schéma est tout d'abord calculée (un élément par point de grille) avec :

$M_{x,y}$ = AVAILABLE : point disponible pour un texte ou une flèche de route ou de piquage.
$M_{x,y}$ = < r,f > : câble sans texte (fil f, route r). Point disponible pour être traversé verticalement par une flèche (note : inclut les points de passages virtuels)
$M_{x,y}$ = UNAVAILABLE : point non utilisable (à l'intérieur d'un composant, d'un texte, d'un trait vertical, etc...).

Génération des routes possibles

La détermination des routes se fait par exemple route par route et verticale par verticale. On omet le traitement pour la route la plus fréquente qui sera la route par défaut du schéma.

Analyse des verticales

Pour chaque route R et chaque verticale X, on analyse les points de la verticale, $L_R$ étant la longueur de la route, de la manière suivante :

1) Les points où on peut éventuellement disposer le texte de la route :

$$\forall\, x \in [X - L_R, X], \; Mx_{,y} = \text{AVAILABLE pour un placement à gauche ou}$$

$$\forall\, x \in [X, X + L_R,], \; M_{x,y} = \text{AVAILABLE pour un placement à droite}$$

2) Les points AVAILABLE ne remplissant pas les conditions ci-dessus : on ne peut y disposer le texte de la route mais ils sont utilisables par la flèche de la route.
3) Les points UNAVAILABLE. On ne peut rien y mettre et ce sont des points bloquants.
4) Les points par lesquels passe le câble ayant la route R (i.e. $M_{x,y}$ = <R, *>).
5) Les points par lesquels passe un câble ayant une route différente de R (i.e. $M_{x,y}$ = <R', *>, R' ≠ R).

Sélection des routes

La sélection des routes se fait juste après l'analyse des verticales et se trouve aussi à l'intérieur de la double boucle routes/verticales.
Les points UNAVAILABLE étant des points d'arrêt absolu, on traite séparément les blocs de points situés entre deux tels points consécutifs et contenant au moins un câble de la route en cours. On regroupe ensuite les points noirs consécutifs en sous-groupes (c'est une factorisation naturelle de câbles contigus ayant même route).
Routes candidates montantes (direction = up) : une route ne peut partir que d'un point AVAILABLE et ne peut rencontrer d'autre point AVAILABLE avant d'avoir atteint le premier sous-groupe de câbles ayant la bonne route. Il y a en effet apparemment très peu de raisons d'éloigner inutilement une route des câbles auxquels elle se rapporte.
On peut paramétrer le nombre de points AVAILABLE rencontrables avant le premier sous-groupe. L'approche ci-dessus affecte la valeur 0 à ce paramètre, mais cela supprime des possibilités et peut à l'extrême rendre le problème infaisable dans certains cas tordus.

Pour chaque point de départ y remplissant la condition ci-dessus, on considère les sous-groupes de câbles $g_1 = <ymin_1, ymax_1 >,...; g_n = <ymin_{n,}, ymax_n >$ se trouvant après y et on génère une route pour chaque factorisation cumulative possible : (y, g1) , (y, g1, g2),..., (y, g1, g2),..., (y, g1, g2,...,$g_n$). La $k^{ième}$ route aura donc les paramètres $<R, X, y, ymax_k, up, o >$, o étant L (gauche) ou R (droite) selon le cas.

De manière similaire, on génère des routes descendantes (direction = down) en parcourant la verticale dans le sens inverse.

Pour chaque route potentielle ainsi générée, on crée une variable binaire IRS (R, X, y, y', d, o) qui vaudra 1 si la route doit effectivement exister et 0 sinon.

On calcule W (R, X y, y', d, o) le nombre de points pas lesquels ne passe pas un câble ayant la route R à l'intérieur de la route (i.e. le nombre de points gaspillés) et T (R, X, y, y', d, o) le nombre de câbles traversés et n'ayant pas la route R.

Les routes < R, X y, y', d, o > ayant :

$$W (R, X\ y, y', d, o) \geq \min_{X,y,y',d,o}\ W (R, X, y, y', d, o) + w_0$$

ainsi que celle ayant :

$$T (R, X, y, y', d, o) \geq \min_{X,y,y',d,o}\ T (R, X, y, y', d, o) + t_0$$

Avec par exemple $w_0 = 8$ et $t_0 = 3$
sont par exemple ignorées.

Soit $F_f$ un ensemble de routes. < R, X, y, y', d, o > est inclus dans tous les $F_f$ tels que la route f est R et au moins un des câbles d'un des sous-groupes de < R, X, y, y', d, o > est f. $F_f$ sera la liste des routes possibles contenant le fil f.

Soit $G_{u, z}$ un ensemble de routes. < R, X, y, y', d, o > est inclus dans tous les $G_{x,z}$ tels que $z \in [y, y']$ et dans tous les $G_{u, y}$ tels que $u \in [X - L_R, X]$ pour les routes à gauche ou $u \in [X, X + L_R]$ pour les routes à droite. $G_{u, z}$ contiendra donc toutes les routes possibles utilisant le point de grille (u,z).

Génération et sélection des piquages possibles

Tout à fait similaire aux routes, excepté que les points AVAILABLE sont ceux tels que :

$$\forall x \in \left[ X - \frac{L_P}{2}, X + \frac{L_P}{2} \right] M_{x, y} = \text{AVAILABLE}$$

et que le point de départ d'un piquage doit avoir deux points AVAILABLE consécutifs.

Pour chaque route potentielle ainsi générée, on crée une variable binaire ISP (P, X, y, y', d) qui vaudra 1 si le piquage doit effectivement exister et 0 sinon.

Le y désigne l'altitude de la ligne interne du texte du piquage. On calcule WP(P, X, y, y', d) le nombre de points gaspillés et TP(P, X, y, y', d) le nombre de câbles traversés et n'étant pas celui sur lequel porte le piquage $P_0$.

De même que précédemment, les piquages < P, X, y, y', d > ayant :

$$WP(P, X, y, y', d) \geq 3$$

ainsi que ceux ayant :

$$TP(P, X, y, y', d) \geq 2$$

sont par exemple ignorés.

On crée également des ensembles de piquages $GP_{u, z}$ et on inclut $< P, X, y, y', d >$ dans tous les $GP_{X, z}$ tels que :

$$z \in [y+1, y'] \text{ si } d = DOWN \text{ ou } z \in [y-1, y'] \text{ si } d = UP$$

et dans tous les $G_{u, y}$ tels que $u \in [X - L_P/2, X + L_P/2]$.
et si d = DOWN dans tous les $G_{u, y +1}$ tels que $u \in [X - L_P/2, X + L_P/2]$.
et si d = UP dans tous les $G_{u, y-1}$ tels que $u \in [X - L_P/2, X + L_P/2]$.

GP $u, z$ contiendra donc tous les piquages possibles utilisant le point de grille (u, z).

Contraintes

Tout fil doit avoir sa route au moins une fois :

$$\forall f \sum_{\langle R,X,y,y',d,o\rangle \in F_f} ISR(R, X, y, y', d, o) \geq 1$$

et de préférence pas plus de trois fois :

$$\forall f \sum_{\langle R,X,y,y',d,o\rangle \in F_f} ISR(R, X, y, y', d, o) \leq 3$$

Tout piquage doit être présent une fois :

$$\forall P \sum_{\langle X,y,y',d\rangle} ISP(P, X, y, y', d) = 1$$

Les piquages et les routes ne peuvent s'intersecter :

$$\forall u, z \text{ tels que } |G_{u,z}|+|GP_{u,z}| \geq 2$$

$$\sum_{\langle R,X,y,y',d,o\rangle \in G_{u,z}} ISR(R, X, y, y', d, o) + \sum_{\langle P,X,y,y',d\rangle \in GP_{u,z}} ISP(P, X, y, y', d) \leq 1$$

Optimisation

Nombre de routes :

$$NROUTE = \sum_{\langle R,X,y,y',d,o\rangle} ISR(R, X, y, y', d, o)$$

Nombre de câbles traversés par les routes :

$$NTRAV_r = \sum_{\substack{\langle R,X,y,y',d,o\rangle \\ T(R,X,y,y',d,o)\neq 0}} T(R, X, y, y', d, o) \, ISR(R, X, y, y', d, o)$$

Nombre de câbles traversés par les piquages :

$$NTRAV_p = \sum_{\substack{(P,X,y,y',d) \\ TP(P,X,y,y',d) \neq 0}} TP\ (P,\ X,\ y,\ y',\ d)\ ISP\ (P,\ X,\ y,\ y',\ d)$$

Longueur gaspillée :

$$LG = \sum_{\substack{(R,X,y,y',d,o) \\ W(R,X,y,y',d,o) \neq 0}} W\ (R,\ X,\ y,\ y',\ d,\ o)\ ISR\ (R,\ X,\ y,\ y',\ d,\ o)$$

$$+ \sum_{\substack{(P,X,y,y',d) \\ WP(P,X,y,y',d) \neq 0}} WP\ (P,\ X,\ y,\ y',\ d)\ ISP\ (P,\ X,\ y,\ y',\ d)$$

on minimise:

$$C_r NROUTE + C_{tr} NTRAV_r + CtpNTRAVp + CgLG$$

avec par exemple : $C_r = 4$, $C_{tr} = 5$, $C_{tp} = 2$ et $Cg = 2$

## Résolution

La description ci-dessus indique à l'homme du métier comment mettre en équation le problème technique qui se pose à lui pour pouvoir le résoudre avec un ordinateur en utilisant des techniques connues de résolution de systèmes d'équations et d'optimisation. Plusieurs techniques de résolution peuvent être appliquées à des systèmes d'équations linéaires tels ceux définis plus haut. On cite par exemple les techniques de "branch and bound" (ou en français technique de séparation et d'évaluation) ou la technique de "branch and cut" (ou en français technique de séparation et de coupe).

Les solutions issues de la résolution de ces systèmes d'équations sont ensuite envoyées vers un traducteur qui interprète les données qu'il reçoit pour les convertir en informations permettant de réaliser un schéma. Ces informations sont alors envoyées vers un "terminal", par exemple un écran d'ordinateur ou bien une imprimante, afin de faire apparaître à l'utilisateur le schéma correspondant aux données qui ont été introduites au départ.

L'utilisation d'équations linéaires et la manière de résoudre en plusieurs passes permet la résolution des problèmes techniques qui se posent lors de la réalisation de manière automatique d'un schéma de câblage. Actuellement, un ordinateur ne pourrait pas résoudre, même pour des chemins de câblage de taille "raisonnable" en une seule passe toutes les équations décrivant les contraintes pour la réalisation de ce schéma de câblage.

## Revendications

1. Procédé de réalisation d'un schéma de câblage (WD) sur lequel se trouvent des boîtes (4) représentant chacune un composant utilisé dans un dispositif à câbler, des liaisons (6) représentant chacune une connexion entre deux composants et des bornes correspondant à un point de connexion possible entre une liaison (6) et une boîte (4), les boîtes (4) étant disposées selon un axe des abscisses et un axe des ordonnées,
   **caractérisé en ce qu'**il comporte les étapes suivantes :

   - entrée des composants à représenter sur ledit schéma de câblage, chaque composant étant d'un type prédéterminé auquel il correspond des contraintes traduites au préalable sous forme d'équations linéaires (R),
   - entrée des connexions à représenter sur ledit schéma de câblage,
   - génération d'un premier système d'équations et résolution de ce système pour optimiser le positionnement relatif des boîtes sur l'axe des abscisses à des abscisses prédéterminées ainsi que l'orientation de ces boîtes,
   - génération d'un second système d'équations et résolution de ce système pour optimiser le placement relatif des boîtes par rapport à l'axe des ordonnées ainsi que le positionnement relatif des bornes de chaque boîte par rapport à ce même axe, et

- génération d'un troisième système d'équations et résolution de ce système pour placer de manière absolue les boîtes par rapport aux axes des abscisses et des ordonnées, et aussi optimiser le routage des connexions,

**2.** Procédé selon la revendication 1, **caractérisé en ce que** les connexions à représenter sont des câbles comportant un ou plusieurs fils, **en ce qu'**une gaine est associée à un câble comportant plusieurs fils, et **en ce que** pendant le positionnement relatif des boîtes sur l'axe des abscisses les gaines des câbles sont positionnées relativement par rapport aux boîtes auxquelles elles sont connectées.

**3.** Procédé selon l'une des revendications 1 ou 2, **caractérisé en ce que** l'étape comportant la génération d'un troisième système d'équations est mise en oeuvre avec les deux sous-étapes suivantes :

- génération d'un troisième système d'équations et résolution de ce système pour placer de manière absolue les boîtes par rapport à l'axe des ordonnées, et
- génération d'un quatrième système d'équations et résolution de ce système pour placer de manière absolue les boîtes par rapport à l'axe des abscisses et optimiser le routage des connexions.

**4.** Procédé selon l'une des revendications 1 à 3, **caractérisé en ce que** l'optimisation du routage des connexions prévoit de vérifier la présence sur les connexions d'un emplacement pour un texte.

**5.** Procédé selon la revendication 4, **caractérisé en ce qu'**après vérification de la présence d'un emplacement pour mettre un texte, l'emplacement de ce texte sur les connexions est déterminé par résolution d'un système d'équations.

**6.** Procédé selon l'une des revendications 1 à 5, **caractérisé en ce que** les équations linéaires utilisent uniquement des nombres entiers.

**7.** Procédé selon l'une des revendications 1 à 6, **caractérisé en ce qu'**une boîte (4) est définie par sa taille, ses bornes et **en ce qu'**elle comporte éventuellement un symbole graphique et/ou un texte et/ou un symbole de câble associé à une ou plusieurs bornes.

**8.** Procédé selon l'une des revendications 1 à 7, **caractérisé en ce que** le type d'une boîte détermine entre autres si la largeur de la boîte est variable, si sa hauteur est variable, si l'ordre de ses bornes est modifiable, si la boîte est munie de prises, ....

**9.** Procédé selon l'une des revendications 1 à 8, **caractérisé en ce que** pour le premier système d'équations, on suppose que les différentes boîtes à représenter sont disposées sur un nombre prédéterminé de lignes verticales, et **en ce que** ce premier système d'équations comporte des équations traduisant des contraintes en hauteur de placement des boîtes sur ces lignes verticales.

**10.** Procédé selon l'une des revendications 1 à 9, **caractérisé en ce que** le premier système d'équations comporte des équations évaluant le nombre de coudes réalisés dans les liaisons reliant les boîtes et **en ce que** ce nombre tend à être minimisé dans l'étape correspondante.

**11.** Procédé selon l'une des revendications 1 à 10, **caractérisé en ce que** le second système d'équations comporte des équations traduisant des contraintes liées au groupage de bornes de connexion au sein des différentes boîtes.

**12.** Procédé selon l'une des revendications 1 à 11, **caractérisé en ce que** le second système d'équations comporte des équations évaluant le nombre d'intersections réalisées entre les liaisons reliant les boîtes et **en ce que** ce nombre tend à être minimisé dans l'étape correspondante.

**13.** Procédé selon l'une des revendications 1 à 12, **caractérisé en ce que** pour le placement absolu des boîtes selon l'axe des ordonnées, les bornes de connexions des boîtes sont disposées à des altitudes qui sont toutes multiples d'un pas de grille prédéterminé.

**14.** Procédé selon l'une des revendications 1 à 13, **caractérisé en ce que** pour le placement absolu des boîtes selon l'axe des ordonnées, des équations évaluant le nombre de décrochages des liaisons sont établies, et **en ce que** ce nombre de décrochages est minimisé.

**15.** Procédé selon l'une des revendications 1 à 14, **caractérisé en ce que** pour le placement absolu des boîtes selon l'axe des abscisses, le nombre de recouvrements des liaisons dans la direction horizontale et dans la direction verticale est évalué et est minimisé.

**16.** Procédé selon l'une des revendications 1 à 15, **caractérisé en ce que** pour le placement absolu des boîtes selon l'axe des abscisses, le nombre des intersections des liaisons est évalué et est minimisé.

**17.** Procédé selon l'une des revendications 1 à 16, **caractérisé en ce que** pour établir les équations des divers systèmes d'équations, des variables réelles, par exemple des variables correspondant à une localisation, une dimension, etc sont définies d'une part et des variables binaires prenant soit la valeur 0, soit la valeur 1, par exemple pour indiquer l'appartenance d'un élément à un ensemble, le positionnement relatif de deux éléments, etc sont définies d'autre part, et **en ce que** les équations sont la traduction à l'aide de ces variables de contraintes propres au type de schéma de câblage réalisé.

**18.** Procédé selon l'une des revendications 1 à 17, **caractérisé en ce que** le procédé comporte en outre, après les étapes de résolution des divers systèmes d'équations, les étapes suivantes :

- introduction des solutions issues de ces résolutions dans un traducteur permettant à partir de données numériques de réaliser un schéma, et
- réalisation du schéma (WD) correspondant aux données numériques trouvées par la résolution des systèmes d'équations.

**19.** Programme d'ordinateur stocké sur un support d'informations, ledit programme comportant des instructions permettant la mise en oeuvre d'un procédé d'optimisation selon l'une quelconque des revendications 1 à 18, lorsque ce programme est chargé et exécuté par un système informatique.

**20.** Système informatique, **caractérisé en ce qu'**il comporte des moyens adaptés à mettre en oeuvre un procédé selon l'une quelconque des revendications 1 à 18.

**21.** Support d'informations lisible par un système informatique, éventuellement totalement ou partiellement amovible, notamment CD-ROM ou support magnétique, tel un disque dur ou une disquette, ou support transmissible, tel un signal électrique ou optique, **caractérisé en ce qu'**il comporte des instructions d'un programme d'ordinateur permettant la mise en oeuvre d'un procédé selon l'une quelconque des revendications 1 à 18, lorsque ce programme est chargé et exécuté par un système informatique.

Fig. 1

EP 1 553 508 A1

NOTE : UNLESS OTHERWISE SPECIFIED PREFIX ALL WIRE IDENTIFICATION WITH ATA 2126
UNLESS OTHERWISE SPECIFIED ALL WIRES ARE CF24 GAUGE
AND SHIELDING CONTINUITY WIRES ARE CF24 GAUGE
UNLESS OTHERWISE SPECIFIED ALL ROUTES ARE 1M

FWS 21 26 03 H 01004 AA

Fig. 2

Fig. 3

Fig. 4

Fig. 5

Boîte

X,Y
W, H

Symbole graphique

Texte

Symbole de type de câble

Position relative

EP 1 553 508 A1

EP 1 553 508 A1

Fig. 7

```
              ┌─────┐
              │ FIN │
              └──┬──┘
                 ◇
                 │
        ┌────────┴────────┐
    ┌───────┐      ┌─────────────┐
    │ Texte │      │  Symbole    │
    └───────┘      │ graphique   │
                   └─────────────┘
```

Fig. 6

```
                    ┌───────┐
                    │ Borne │
                    └───△───┘
                        │
        ┌───────────────┼────────────────────────┐
  ┌─────────────┐  ┌─────────────┐          ┌──────────┐
  │  Point de   │  │  Masse de   │          │  Cerise  │
  │  connexion  │  │ connecteur  │          └──────────┘
  └─────────────┘  └─────────────┘
```

Fig. 8

**Equipement**

Taille (L*h) variable
Découper prise
Orienter prise
Non éclatable
Présent en zone neutre
Ordre des bornes libre

1..n

**Prise**

Ordre des bornes libre

0..n

**Borne**

1..n

**Borne**

EP 1 553 508 A1

Fig. 9

**Fig. 10**

## DISK

UC

Clavier

Ecran

Imprimante

Port E/S

RAM

ROM

Program

*Fig. 11*

**Office européen**
**des brevets**

# RAPPORT DE RECHERCHE EUROPEENNE

Numéro de la demande

EP 05 35 2001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | REN-SONG TSAY ET AL: "PROUD: A SEA-OF-GATES PLACEMENT ALGORITHM" IEEE DESIGN & TEST OF COMPUTERS, IEEE COMPUTERS SOCIETY. LOS ALAMITOS, US, vol. 5, no. 6 INDEX, 1 décembre 1988 (1988-12-01), pages 44-56, XP000111294 ISSN: 0740-7475 * page 44, colonne 2, ligne 21 - page 45, colonne 1, ligne 38 * ----- | 1,19-21 | G06F17/50 |
| A | US 5 038 294 A (ARAKAWA HIROSHI ET AL) 6 août 1991 (1991-08-06) * colonne 2, ligne 17 - ligne 57 * ----- | 1,19-21 | |
| A | GB 1 362 910 A (IBM) 7 août 1974 (1974-08-07) * page 3, ligne 55 - page 4, ligne 26 * ----- | 1 | |

| | DOMAINES TECHNIQUES RECHERCHES (Int.Cl.7) |
|---|---|
| | G06F |

Le présent rapport a été établi pour toutes les revendications

| Lieu de la recherche | Date d'achèvement de la recherche | Examinateur |
|---|---|---|
| La Haye | 1 mars 2005 | Guingale, A |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

**ANNEXE AU RAPPORT DE RECHERCHE EUROPEENNE
RELATIF A LA DEMANDE DE BREVET EUROPEEN NO.**

EP 05 35 2001

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-03-2005

| Document brevet cité au rapport de recherche | | Date de publication | Membre(s) de la famille de brevet(s) | | Date de publication |
|---|---|---|---|---|---|
| US 5038294 | A | 06-08-1991 | JP | 1131963 A | 24-05-1989 |
| | | | JP | 2535976 B2 | 18-09-1996 |
| GB 1362910 | A | 07-08-1974 | US | T930001 I4 | 07-01-1975 |

Pour tout renseignement concernant cette annexe : voir Journal Officiel de l'Office européen des brevets, No.12/82

EPO FORM P0460